# EUROPÄISCHE PATENTSCHRIFT

(11) **EP 3 190 038 B1**
(45) Veröffentlichungstag und Bekanntmachung des Hinweises auf die Patenterteilung: **09.10.2019**
(21) Anmeldenummer: 17153658.4
(22) Anmeldetag: 18.07.2014
(51) Int. Cl.: B62M 9/10

(54) **MEHRFACH-RITZELANORDNUNG FÜR EINE FAHRRADSCHALTUNG**
MULTI-GEAR PINION ASSEMBLY FOR A BICYCLE GEARING SYSTEM
AGENCEMENT DE PLUSIEURS PIGNONS POUR UN DÉRAILLEUR DE VÉLO

(30) Priorität: 19.07.2013 DE 102013012066
(43) Veröffentlichungstag der Anmeldung: 12.07.2017
(62) Teilanmeldung aus: 14002512.3
(73) Patentinhaber: SRAM Deutschland GmbH, 97424 Schweinfurt (DE)
(72) Erfinder: Braedt, Henrik, 97456 Hambach (DE); Reinbold, Matthias, 97070 Würzburg (DE)
(74) Vertreter: Thum, Bernhard

(56) Entgegenhaltungen:
- EP-A2- 2 546 135
- JP-U- S63 139 092
- US-A1- 2011 130 233

## Beschreibung

Die Erfindung betrifft eine Mehrfach-Ritzelanordnung, die zur Montage auf einer Hinterradachse eines Fahrrads vorgesehen ist. Ferner betrifft die Erfindung eine mit einer derartigen Mehrfach-Ritzelanordnung ausgestattete Hinterradachsanordnung für ein Fahrrad.

Mehrfach-Ritzelanordnungen für Fahrradschaltungen an Hinterradachsen sind üblicherweise über einen Antreiber und eine Lageranordnung drehbar auf der Hinterradachse eines Fahrrads gelagert. Der Antreiber steht über eine Freilaufkupplung mit einer Nabenhülse in drehmomentübertragendem Eingriff und lässt eine Drehmomentübertragung in der einen Drehrichtung (Antriebsrichtung) zu, wohingegen er in der anderen Richtung von der Nabenhülse drehentkoppelt ist, um einen Freilauf bereitzustellen. Bei hochentwickelten Fahrradschaltungen, wie sie zwischenzeitlich sowohl im professionellen Radsport als auch bei Freizeitsportlern eingesetzt werden, wird die Anzahl der Ritzel immer größer. Dabei kommen zum Teil relativ große Abstufungen aber insbesondere auch relativ enge Abstufungen zum Einsatz, um beispielsweise eine optimale Übersetzung beim Befahren von flachem Terrain oder bei Fahrten in der Gruppe mit konstanter Trittfrequenz zu ermöglichen. In beiden Fällen, d.h. dann, wenn enge Abstufungen mit kleinen Übersetzungssprüngen vorgesehen sind, oder dann, wenn große Übersetzungssprünge bereitgestellt werden sollen, besteht ein zunehmender Bedarf an sehr kleinen Ritzeln, d.h. Ritzeln mit 10 Zähnen oder weniger. Derartig kleine Ritzel lassen sich aber nicht mehr auf einem Antreiber der herkömmlichen Art montieren.

Aus der DE 10 2011 107 162 A1 ist es bekannt, eine Mehrfach-Ritzelanordnung mit einem Antreiber zu versehen, der einen in seinem Außendurchmesser reduzierten Abschnitt aufweist. Der in seinem Außendurchmesser reduzierte Abschnitt des Antreibers ist mit einem Außengewinde versehen, über das ein mit einem Innengewinde versehener Adapter mit dem Antreiber verschraubt werden kann. Wenigstens ein Ritzel, das einen Innendurchmesser aufweist, der kleiner ist als ein Außendurchmesser des Antreibers ist dann über den Adapter mit dem Antreiber verbindbar.

Weiterer Stand der Technik findet sich in den Dokumenten EP 1 342 657 B1, DE 201 16 764 U1, EP 0 834 450 B1 und DE 10 2011 103 489 A1.

US 2011/130233 A1, welche die Präambel des Anspruchs 1 offenbart, offenbart eine Ritzelhalteanordnung, die einen Antriebskörper umfasst. Der Antriebskörper trägt eine Vielzahl von Ritzeln. Die Ritzel sind über ein Verbindungselement mit einem Tragelement verbunden. Die Ritzel sind über Verbindungselemente mit einem weiteren Ritzeln verbunden.

Der Erfindung liegt die Aufgabe zugrunde, eine Mehrfach-Ritzelanordnung bereitzustellen, die mit kleinen Ritzeln ausgestattet, aber dennoch einfach aufgebaut ist und ein geringes Gewicht aufweist. Ferner liegt der Erfindung die Aufgabe zugrunde, eine mit einer derartigen Mehrfach-Ritzelanordnung ausgestattete Hinterradachsanordnung für ein Fahrrad anzugeben.

Diese Aufgabe wird durch eine Mehrfach-Ritzelanordnung mit den Merkmalen des Anspruchs 1 und eine Hinterradachsanordnung für ein Fahrrad mit den Merkmalen des Anspruchs 15 gelöst.

Weitere Ausführungsformen der Erfindung sind in den abhängigen Patentansprüchen angegeben.

Eine zur Montage an einer Hinterradachse eines Fahrrads vorgesehene Mehrfach-Ritzelanordnung umfasst einen Aufnahmekörper, der zur Montage auf der Hinterradachse ausgebildet ist und an dem einzelne Ritzel der Mehrfachritzelanordnung angebracht werden können. Der Aufnahmekörper kann beispielsweise hülsenförmig ausgeführt und dazu eingerichtet sein, mit einer Nabenhülse verbunden zu werden.

Das hier als "Nabenhülse" bezeichnete Element wird auf dem Gebiet der Fahrradtechnik häufig auch als "Antreiber" bezeichnet.

Die Mehrfachritzelanordnung umfasst ferner eine Ritzelbaugruppe mit einem ersten Ritzel, dessen Innendurchmesser größer ist als ein Außendurchmesser des Aufnahmekörpers. Das erste Ritzel ist mit dem Aufnahmekörper verbunden. Beispielsweise kann das erste Ritzel über eine im Bereich seines Innenumfangs vorgesehene Verbindungseinrichtung im Bereich eines Außenumfangs des Aufnahmekörpers mit dem Aufnahmekörper verbunden sein. Die Ritzelbaugruppe stützt sich radial an dem Aufnahmekörper ab. Diese radiale Abstützung der Ritzelbaugruppe an dem Aufnahmekörper erfolgt im Bereich des Innenumfangs des ersten Ritzels. Zumindest in diesem Bereich steht das erste Ritzel in Kontakt mit dem Aufnahmekörper.

Ferner umfasst die Ritzelbaugruppe mindestens ein zweites Ritzel, dessen Innendurchmesser kleiner ist als ein Außendurchmesser des Aufnahmekörpers. Das zweite Ritzel ist freitragend ausgeführt und über das erste Ritzel mit dem Aufnahmekörper verbunden.

Mit anderen Worten, bei der Ritzelbaugruppe der Mehrfach-Ritzelanordnung besteht keine direkte Verbindung zwischen dem mindestens einen zweiten Ritzel der Ritzelbaugruppe und dem Aufnahmekörper. Vielmehr ist das mindestens eine zweite Ritzel freitragend ausgeführt und lediglich über das erste Ritzel mit dem Aufnahmekörper gekoppelt.

Das erste Ritzel weist vorzugsweise eine größere Anzahl von Zähnen auf als das mindestens eine zweite Ritzel und ist, in Richtung der Hinterradachse betrachtet, benachbart zu dem mindestens einen zweiten Ritzel in einem definierten Abstand von dem mindestens einen zweiten Ritzel angeordnet. Ferner können das erste und das mindestens eine zweite Ritzel einstückig ausgeführt sein. Alternativ können das erste Ritzel und das mindestens eine zweite Ritzel auch über Haltebolzen oder andere Verbindungsmittel miteinander verbunden sein. Zur Verbindung des ersten Ritzels mit dem benachbarten zweiten Ritzel kann ein sich parallel zu der Hinterradachse erstreckender erster Flanschabschnitt oder ein Haltebolzen vorgesehen sein. Insbesondere kann sich der erste Flanschabschnitt oder der Haltebolzen zwischen einer dem mindestens einen zweiten Ritzel zugewandten Flanke des ersten Ritzels und einer dem ersten Ritzel zugewandten Flanke des mindestens einen zweiten Ritzels erstrecken. Durch den ersten Flanschabschnitt wird dann auch der Abstand des ersten Ritzels von dem mindestens einen zweiten Ritzel festgelegt.

Die oben genannte und beanspruchte Durchmesserwahl von erstem und zweitem Ritzel macht es möglich, das erste Ritzel auf dem Aufnahmekörper sicher anzubringen und diesen dann stirnseitig zu überspannen, wobei das zweite Ritzel dann sozusagen axial vor dem Aufnahmekörper angeordnet ist und entsprechend klein, d.h. mit kleinerem Durchmesser als der Aufnahmekörper ausgeführt werden kann.

Da das mindestens eine zweite Ritzel einen geringeren Innendurchmesser aufweist als das erste Ritzel, hat der erste Flanschabschnitt in radialer Richtung vorzugsweise einen geringeren Abstand vom Innenumfang des ersten Ritzels als von einem Innenumfang des mindestens einen zweiten Ritzels. Der erste Flanschabschnitt kann in Form eines durchgängigen Rings ausgebildet sein, um das erste Ritzel besonders stabil mit dem mindestens einen zweiten Ritzel zu verbinden. Es ist jedoch auch denkbar, den ersten Flanschabschnitt mit Durchbrüchen zu versehen, um das Gewicht der Ritzelbaugruppe zu reduzieren.

In einer bevorzugten Ausführungsform der Mehrfach-Ritzelanordnung umfasst die Ritzelbaugruppe zwei zweite Ritzel. Damit ist gemeint, dass zwei Ritzel mit kleineren Durchmessern dem ersten Ritzel "axial vorgelagert" sind. Falls gewünscht, kann die Ritzelbaugruppe jedoch auch mehr als zwei zweite Ritzel mit entsprechend kleinerem Außendurchmesser umfassen. Vorzugsweise weisen in einer Ritzelbaugruppe mit zwei zweiten Ritzeln die zwei zweiten Ritzel eine unterschiedliche Anzahl von Zähnen auf, wobei das zweite Ritzel mit der größeren Anzahl von Zähnen vorzugsweise zwischen dem zweiten Ritzel mit der kleineren Anzahl von Zähnen und dem ersten Ritzel der Ritzelbaugruppe angeordnet ist. Die wenigstens zwei zweiten Ritzel können über separate Verbindungsmittel miteinander verbunden sein. Die Verbindungsmittel können beispielsweise Haltebolzen oder ähnliche Verbindungsmittel sein. Die zwei zweiten Ritzel der Ritzelbaugruppe können über einen sich parallel zu der Hinterradachse erstreckenden zweiten Flanschabschnitt miteinander verbunden sein. Die Verbindungsmittel oder der zweite Flanschabschnitt können sich vorzugsweise zwischen zwei einander zugewandten Flanken der zwei zweiten Ritzel erstrecken. Durch die Verbindungsmittel bzw. den zweiten Flanschabschnitt wird dann auch der axiale Abstand zwischen den zwei zweiten Ritzeln festgelegt. Wie voranstehend erwähnt wurde, können die Verbindungsmittel Haltebolzen sein.

Ferner können zwischen benachbarten Ritzeln der Ritzelbaugruppe Abstandshalter vorgesehen sein. Die Abstandshalter können einen vorbestimmten Abstand in axialer Richtung zwischen dem ersten Ritzel und dem zweiten Ritzel sowie zwischen den beiden zweiten Ritzeln einstellen. Die Abstandshalter können ringförmig ausgebildet sein, und sich an axiale Flächen benachbarter Ritzel anlegen. Die Abstandshalter können mit den Haltebolzen in Verbindung stehen bzw. werden von den Haltebolzen zwischen den benachbarten Ritzeln der Ritzelbaugruppe gehalten. Dazu weisen die Abstandshalter Ausnehmungen auf, in denen die Haltebolzen zumindest abschnittsweise aufgenommen werden können.

Grundsätzlich ist es denkbar, dass die zwei oder mehr zweiten Ritzel unterschiedliche Innendurchmesser aufweisen. Insbesondere kann das zweite Ritzel mit der geringeren Anzahl von Zähnen einen kleineren Innendurchmesser aufweisen als das zweite Ritzel mit der größeren Anzahl von Zähnen. Der zweite Flanschabschnitt hat dann in radialer Richtung vorzugsweise einen geringeren Abstand von einem Innenumfang des zweiten Ritzels mit dem größeren Innendurchmesser als von einem Innenumfang des zweiten Ritzels mit dem kleineren Innendurchmesser.

Alternativ dazu ist es jedoch auch denkbar, die Ritzelbaugruppe der Mehrfach-Ritzelanordnung mit zwei zweiten Ritzeln auszustatten, die gleiche Innendurchmesser aufweisen. Der zweite Flanschabschnitt verbindet dann vorzugsweise die Innenumfangsflächen der zwei zweiten Ritzel. Ähnlich wie der erste Flanschabschnitt kann auch der zweite Flanschabschnitt in Form eines durchgängigen Rings ausgebildet sein, um die zwei zweiten Ritzel stabil miteinander zu verbinden. Es ist jedoch auch denkbar, den zweiten Flanschabschnitt mit Durchbrüchen zu versehen, um das Gewicht der Ritzelbaugruppe zu reduzieren.

Das erste Ritzel der Ritzelbaugruppe kann im Bereich seines Innenumfangs mit einem Rastvorsprung versehen sein. Der Rastvorsprung kann, betrachtet in Richtung der Hinterradachse, breiter sein als das erste Ritzel selbst. Um eine derartige Konfiguration zu realisieren, ist das erste Ritzel vorzugsweise mit einem dritten Flanschabschnitt versehen, der sich vorzugsweise parallel zu der Hinterradachse in von dem mindestens einen zweiten Ritzel abgewandter Richtung von einer von dem mindestens einen zweiten Ritzel abgewandten Flanke des ersten Ritzels erstreckt. Der Rastvorsprung kann dann an einer Innenumfangsfläche des dritten Flanschabschnitts ausgeführt sein. Der dritte Flanschabschnitt kann in Form eines durchgängigen Rings ausgebildet sein. Es ist jedoch auch denkbar, den dritten Flanschabschnitt mit Durchbrüchen zu versehen, um das Gewicht der Ritzelbaugruppe zu reduzieren.

Der Aufnahmekörper kann im Bereich seines Außenumfangs mit einer Rastnut versehen sein, die vorzugsweise zum Zusammenwirken mit dem Rastvorsprung des ersten Ritzels ausgebildet ist. Wenn sich der an dem ersten Ritzel ausgebildete Rastvorsprung in Eingriff mit der Rastnut des Aufnahmekörpers befindet, ist das erste Ritzel und folglich die gesamte Ritzelbaugruppe mit dem Aufnahmekörper verbunden. Eine derartige Rastvorrichtung ermöglicht eine besonders einfache Montage der Ritzelbaugruppe am Aufnahmekörper.

Die Ritzelbaugruppe bzw. das erste Ritzel kann gemäß einer Ausführungsform der Erfindung über ein an dem Aufnahmekörper angeordnetes Sicherungselement mit dem Aufnahmekörper verbunden sein. Bei dem Sicherungselement handelt es sich um einen Haltering. Der Haltering kann in einer Haltenut in dem Aufnahmekörper aufgenommen werden. Die Haltenut kann von zwei Haltenasen begrenzt werden, die am Außenumfang des Aufnahmekörpers vorgesehen sein können. Der Halteringkann sich um den Außenumfang des Aufnahmekörpers herum erstrecken.

Der Aufnahmekörper kann ferner fest mit dem ersten Ritzel der Ritzelbaugruppe verbunden sein. In diesem Fall kann der Aufnahmekörper mehrteilig ausgebildet sein. Der Aufnahmekörper kann über ein Sicherungselement axial auf dem Nabenhülse gesichert werden. Das Sicherungselement kann zur Befestigung des Aufnahmekörpers beispielsweise mit der Nabenhülse verschraubt werden.

Es sei jedoch ausdrücklich erwähnt, dass die vorliegende Erfindung auch bei Lösungen zum Einsatz kommt, die an sich keinen rohrförmigen Aufnahmekörper aufweisen, sondern bei denen die Drehmomentübertragung direkt von der Ritzelanordnung auf einen Nabenkörper erfolgt, wie dies beispielsweise im Stand der Technik gemäß DE 10 2011 103 489 A1 der Anmelderin beschrieben ist. Auf dieses Dokument soll an dieser Stelle ausdrücklich Bezug genommen werden.

In einer Ausführungsform kann die Mehrfach-Ritzelanordnung zumindest ein weiteres Ritzel umfassen, das durch mindestens einen sich parallel zu der Hinterradachse erstreckenden Haltebolzen mit der Ritzelbaugruppe verbunden ist. Eine drehmomentübertragende Verbindung zwischen dem weiteren Ritzel und der Ritzelbaugruppe wird über einen das zumindest eine weitere Ritzel mit der Ritzelbaugruppe verbindenden (ersten) Haltebolzen hergestellt.

Das weitere Ritzel kann so geformt und über den mindestens einen sich parallel zu der Hinterradachse erstreckenden ersten Haltebolzen derart mit der Ritzelbaugruppe verbunden sein, dass sein Innenumfang in einem Abstand von dem Außenumfang des Aufnahmekörpers angeordnet ist. Das weitere Ritzel kann dann einen den Außendurchmesser des Aufnahmekörpers deutlich übersteigenden Innendurchmesser haben und besonders leichtgewichtig ausgeführt sein. Dadurch wird eine weitere Reduktion des Gesamtgewichts der Mehrfach-Ritzelanordnung möglich. Ferner kann darauf verzichtet werden, den Aufnahmekörper mit entsprechenden Lager- und Befestigungsvorrichtungen zur drehmomentübertragenden Verbindung des weiteren Ritzels mit dem Aufnahmekörper auszustatten. Damit kann auch der Aufnahmekörper einfacher und leichtgewichtiger gestaltet werden.

Die sich parallel zu der Hinterradachse erstreckenden Haltebolzen können in den entsprechenden Ritzeln ausgebildete Aufnahmebohrungen durchsetzen. Dadurch wird eine sichere und gleichzeitig leichtgewichtige drehmomentübertragende Verbindung zwischen dem weiteren Ritzel und der Ritzelbaugruppe hergestellt.

Ferner kann die Mehrfach-Ritzelanordnung mindestens einen sich parallel zu der Hinterradachse erstreckenden zweiten Haltebolzen umfassen, durch den noch ein zusätzliches Ritzel mit dem weiteren Ritzel verbunden und über das weitere Ritzel mit die Ritzelbaugruppe drehmomentübertragend verbunden wird.

Dieses zusätzliche weitere Ritzel kann, ebenso wie das weitere Ritzel, so geformt und über den mindestens einen sich parallel zu der Hinterradachse erstreckenden zweiten Haltebolzen derart mit dem weiteren Ritzel verbunden sein, dass sein Innenumfang in einem Abstand von dem Außenumfang des Aufnahmekörpers angeordnet ist. Das zusätzliche Ritzel, das vorzugsweise eine größere Anzahl von Zähnen aufweist als das weitere Ritzel, kann dann ebenfalls besonders leichtgewichtig gestaltet werden.

Der mindestens eine sich parallel zu der Hinterradachse erstreckende zweite Haltebolzen durchsetzt vorzugsweise in dem zusätzlichen Ritzel sowie in dem weiteren Ritzel ausgebildete Aufnahmebohrungen und stellt dadurch eine sichere und leichtgewichtige Verbindung zwischen dem zusätzlichen Ritzel und dem weiteren Ritzel her.

Eine Weiterbildung der Erfindung sieht vor, dass die Haltebolzen in einem Bereich radial innerhalb einer Zahnspitze des nächstkleineren Ritzels angeordnet sind. Dies bedeutet, dass der Haltebolzen mit dem jeweiligen Ritzel in einem Bereich verbunden ist, in dem hinreichend viel Material zur Verfügung steht, um den Haltebolzen zu fixieren und die bei der Drehmomentübertragung auftretenden Kräfte zu übertragen.

Je nach Bedarf kann die Mehrfach-Ritzelanordnung eine beliebige Anzahl an weiteren Ritzeln umfassen, die jeweils eine beliebige Anzahl von Zähnen aufweisen können. Jedes weitere Ritzel kann dann über mindestens einen entsprechenden Haltebolzen mit axial in Richtung der Ritzelbaugruppe benachbarten weiteren Ritzeln und schließlich der Ritzelbaugruppe, d.h. dem ersten Ritzel der Ritzelbaugruppe verbunden sein, um eine drehmomentübertragende Verbindung zwischen den weiteren Ritzeln herzustellen. Jedes weitere Ritzel kann dann so geformt und über den mindestens einen Haltebolzen derart mit einem axial in Richtung der Ritzelbaugruppe benachbarten weiteren Ritzel verbunden sein, dass sein Innenumfang in einem Abstand von dem Außenumfang des Aufnahmekörpers angeordnet ist. Über die Ritzelbaugruppe können sich die weiteren Ritzel radial an dem Aufnahmekörper abstützen. Insbesondere das erste Ritzel der Ritzelbaugruppe dient hier zur radialen Abstützung, da es mit dem Aufnahmekörper in Verbindung steht. Die Drehmomentübertragung zwischen der Ritzelbaugruppe und der Nabenhülse erfolgt über das Ritzel mit der größten Anzahl an Zähnen bzw. das Ritzel mit dem größten Durchmesser. Dieses Ritzel steht in drehmomentübertragender Verbindung mit der Nabenhülse. Beispielsweise kann die Nabenhülse eine Außenverzahnung aufweisen, die in eine korrespondierende Innenverzahnung des größten Ritzels eingreift.

Eine Hinterrad-Achsanordnung gemäß der Erfindung für ein Fahrrad umfasst eine Hinterradachse, die zur Befestigung an einem Fahrradrahmen ausgebildet ist. Ferner umfasst die Hinterrad-Achsanordnung eine auf der Hinterradachse drehbar gelagerte Nabenhülse. Eine oben beschriebene Mehrfach-Ritzelanordnung der Hinterrad-Achsanordnung wirkt mit einer Antriebskette zusammen. Schließlich ist die Hinterrad-Achsanordnung mit einer Drehmomentübertragungsanordnung zum richtungsselektiven Übertragen eines Drehmoments von der Mehrfach-Ritzelanordnung auf die Nabenhülse ausgestattet, um eine Freilauffunktion zu realisieren.

Im Folgenden werden beispielhafte Ausführungsformen der Erfindung anhand der beigefügten, schematischen Zeichnungen näher erläutert. Es stellen dar:
- Figur 1: einen Ausschnitt einer Mehrfach-Ritzelanordnung zur Montage an einer Hinterradachse eines Fahrrads gemäß einer ersten Ausführungsform der Erfindung;
- Figur 2: eine Schnittansicht einer Ritzelbaugruppe der Mehrfach-Ritzelanordnung gemäß Figur 1;
- Figur 3: eine Schnittansicht der Ritzelbaugruppe gemäß der ersten Ausführungsform der Erfindung;
- Figur 4: eine perspektivische Ansicht der Mehrfach-Ritzelanordnung gemäß der ersten Ausführungsform der Erfindung;
- Figur 5: eine Schnittansicht der Mehrfach-Ritzelanordnung gemäß der ersten Ausführungsform der Erfindung;
- Figur 6: eine weitere perspektivische Ansicht der Mehrfach-Ritzelanordnung gemäß der ersten Ausführungsform der Erfindung;
- Figur 7: eine weitere Schnittansicht der Mehrfach-Ritzelanordnung gemäß der ersten Ausführungsform der Erfindung;
- Figuren 8-10a, 10b, 10c: Ansichten einer Ritzelbaugruppe gemäß einer zweiten Ausführungsform der Erfindung;
- Figur 11: eine perspektivische Ansicht einer Mehrfach-Ritzelanordnung gemäß der zweiten Ausführungsform der Erfindung;

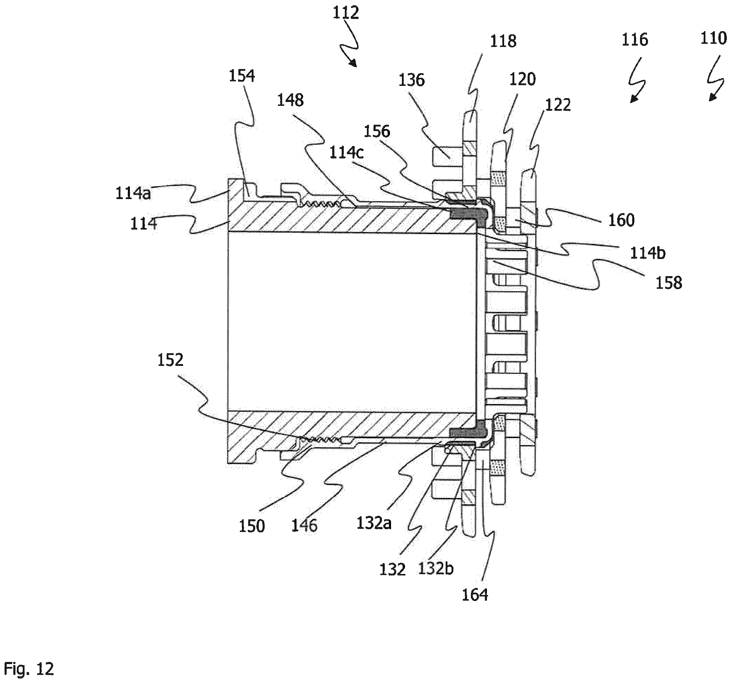

- Figur 12: eine Schnittansicht einer Mehrfach-Ritzelanordnung gemäß der zweiten Ausführungsform der Erfindung;
- Figur 13: eine perspektivische Ansicht der Mehrfach-Ritzelanordnung gemäß der zweiten Ausführungsform der Erfindung;
- Figur 14: eine weitere Schnittansicht der Mehrfach-Ritzelanordnung gemäß der zweiten Ausführungsform der Erfindung;
- Figur 15a-c: Ansichten einer Ritzelbaugruppe gemäß einer dritten Ausführungsform der Erfindung;
- Figur 16: eine perspektivische Ansicht einer Mehrfach-Ritzelanordnung gemäß der dritten Ausführungsform der Erfindung;
- Figur 17: eine Schnittansicht der Mehrfach-Ritzelanordnung gemäß der dritten Ausführungsform der Erfindung;
- Figur 18: eine perspektivische Ansicht einer Mehrfach-Ritzelanordnung gemäß einer vierten Ausführungsform der Erfindung;
- Figur 19: eine Schnittansicht der Mehrfach-Ritzelanordnung gemäß der vierten Ausführungsform der Erfindung;
- Figur 20: eine weitere perspektivische Ansicht der Mehrfach-Ritzelanordnung gemäß der vierten Ausführungsform der Erfindung;
- Figur 21: eine Schnittansicht der Mehrfach-Ritzelanordnung gemäß der vierten Ausführungsform der Erfindung;
- Figuren 22, 23: Ansichten einer Ritzelbaugruppe gemäß einer fünften Ausführungsform der Erfindung;
- Figur 24: eine perspektivische Ansicht einer Mehrfach-Ritzelanordnung gemäß der fünften Ausführungsform der Erfindung;
- Figur 25: eine Seitenansicht der Mehrfach-Ritzelanordnung gemäß der fünften Ausführungsform der Erfindung; und
- Figur 26: eine Schnittansicht einer Mehrfach-Ritzelanordnung gemäß einer sechsten Ausführungsform der Erfindung.

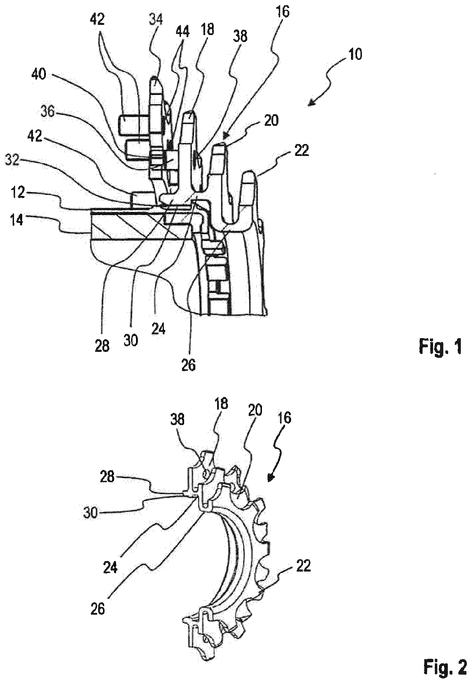

Eine in Figuren 1 bis 7 gezeigte Mehrfach-Ritzelanordnung 10 umfasst einen Aufnahmekörper 12, der zur Montage auf einer nicht veranschaulichten Hinterradachse ausgebildet ist. Insbesondere ist der Aufnahmekörper 12 dazu vorgesehen, über eine Drehmomentübertragungsanordnung (ebenfalls nicht gezeigt) zum richtungsselektiven Übertragen eines Drehmoments von der Mehrfach-Ritzelanordnung 10 auf eine Nabenhülse 14 auf der Nabenhülse 14 gelagert zu werden. In Antriebsrichtung ermöglicht die Drehmomentübertragungsanordnung eine Übertragung eines Drehmoments von der Mehrfach-Ritzelanordnung 10 auf die Nabenhülse 14. In einer der Antriebsrichtung entgegengesetzten Drehrichtung sorgt die Drehmomentübertragungsanordnung dagegen für eine Drehentkopplung der Mehrfach-Ritzelanordnung 10 von einem nicht dargestellten Nabenkörper, wodurch eine Freilauffunktion realisiert wird.

Eine Ritzelbaugruppe 16 der Mehrfach-Ritzelanordnung 10 (siehe auch Figur 2), die im Folgenden zunächst im Detail erläutert wird, umfasst ein erstes Ritzel 18, ein zweites Ritzel 20 sowie ein weiteres zweites Ritzel 22. Das erste Ritzel 18 hat eine größere Anzahl von Zähnen als das zweite Ritzel 20. Das zweite Ritzel 20 hat jedoch eine größere Anzahl von Zähnen als das weitere zweite Ritzel 22. Die Ritzelbaugruppe 16 ist einstückig ausgebildet, d.h. das erste Ritzel 18, das zweite Ritzel 20 und das weitere zweite Ritzel 22 sind integriert miteinander ausgeführt.

Das erste Ritzel 18 hat einen Innendurchmesser, der größer ist als ein Außendurchmesser des Aufnahmekörpers 12, und ist mit dem Aufnahmekörper 12 verbunden. Im Gegensatz dazu weisen die zwei zweiten Ritzel 20, 22 jeweils einen Innendurchmesser auf, der kleiner ist als ein Außendurchmesser des Aufnahmekörpers 12. Beide zweite Ritzel 20, 22 sind freitragend ausgeführt, d.h. nicht unmittelbar drehmomentübertragend mit der Nabenhülse 14 verbunden. Vielmehr wird eine drehmomentübertragende Verbindung zwischen den zwei zweiten Ritzeln 20, 22 und dem Aufnahmekörper 12 über das erste Ritzel 18 der Ritzelbaugruppe 16 und den sich anschließenden Ritzelsatz 34 hergestellt, wie im Folgenden noch im Detail beschrieben wird.

Hierzu weist die Ritzelbaugruppe 16 einen in Form eines durchgängigen Rings ausgebildeten ersten Flanschabschnitt 24 auf, der sich parallel zu der Hinterradachse zwischen dem ersten Ritzel 18 und dem zweiten Ritzel 20 erstreckt. Insbesondere erstreckt sich der erste Flanschabschnitt im Wesentlichen senkrecht zu einander gegenüberliegenden Flanken des ersten Ritzels 18 und des zweiten Ritzels 20, wobei ein Abstand des ersten Flanschabschnitts 24 von einem Innenumfang des ersten Ritzels 18 geringer ist als ein Abstand des ersten Flanschabschnitts 24 von einem Innenumfang des zweiten Ritzels 20.

Das zweite Ritzel 20 und das weitere zweite Ritzel 22 weisen gleiche Innendurchmesser auf. Ein zweiter Flanschabschnitt 26, der ebenfalls in Form eines durchgängigen Rings ausgebildet ist und sich, ebenso wie der erste Flanschabschnitt 24, parallel zu der Hinterradachse und im Wesentlichen senkrecht zu einander gegenüberliegenden Flanken der beiden zweiten Ritzel 20, 22 erstreckt, verbindet eine Innenumfangfläche des zweiten Ritzels 20 mit einer Innenumfangsfläche des weiteren zweiten Ritzels 22.

Zur radial abstützenden Verbindung der Ritzelbaugruppe 16 mit dem Aufnahmekörper 12 ist das erste Ritzel 18 mit einem dritten Flanschabschnitt 28 versehen, der sich parallel zu der Hinterradachse in von den zwei zweiten Ritzeln 20, 22 abgewandter Richtung im Bereich des Innenumfangs des ersten Ritzels 18 von einer von den zwei zweiten Ritzeln 20, 22 abgewandten Flanke des ersten Ritzels 18 erstreckt. Auch der dritte Flanschabschnitt 28 ist in Form eines durchgängigen Rings ausgebildet. Im Bereich einer Innenumfangsfläche des dritten Flanschabschnitts 28 ist ein Rastvorsprung 30 ausgebildet, der sich mit einer im Bereich eines Außenumfangs des Aufnahmekörpers 12 ausgebildeten Rastnut 32 in Eingriff befindet. Die durch den Rastvorsprung 30 und die Rastnut 32 gebildete Rastvorrichtung ermöglicht eine sichere axiale Verbindung der Ritzelbaugruppe 16 mit dem Aufnahmekörper 12 ohne das Gewicht der Ritzelbaugruppe 16 übermäßig zu erhöhen.

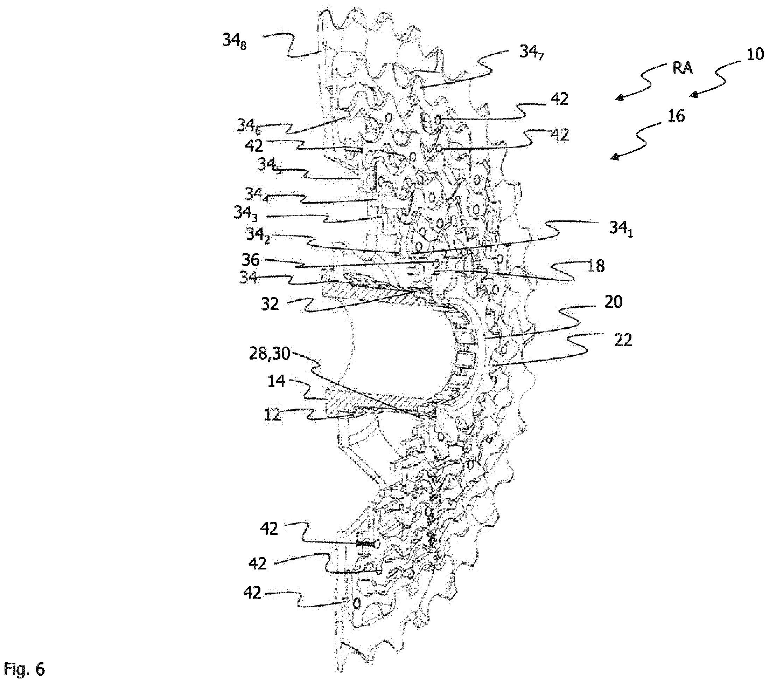

Ein weiteres Ritzel 34 der Mehrfach-Ritzelanordnung 10 weist eine größere Anzahl von Zähnen auf als das erste Ritzel 18 der Ritzelbaugruppe 16. Das weitere Ritzel 34 ist durch eine Mehrzahl von ersten Haltebolzen 36, die sich parallel zu der Hinterradachse erstrecken, mit der Ritzelbaugruppe 16, d.h. dem ersten Ritzel 18 der Ritzelbaugruppe 16, verbunden. Die ersten Haltebolzen durchsetzen jeweils in dem weiteren Ritzel 34 sowie dem ersten Ritzel 18 der Ritzelbaugruppe 16 ausgebildete Aufnahmebohrungen 38, 40. Über die Ritzelbaugruppe 16 bzw. das erste Ritzel 18 der Ritzelbaugruppe 16 wird eine drehmomentübertragende Verbindung zwischen dem weiteren Ritzel 34 und der Nabenhülse 14 hergestellt. Schließlich weist die Mehrfach-Ritzelanordnung 10 eine Mehrzahl von sich parallel zu der Hinterradachse erstreckenden zweiten Haltebolzen 42 auf. Die zweiten Haltebolzen 42 dienen dazu, noch ein weiteres Ritzel (Fig. 6), das eine größere Anzahl von Zähnen aufweist als das weitere Ritzel 34, über das weitere Ritzel 34 sowie die Ritzelbaugruppe 16, mit dem Aufnahmekörper 12 zu verbinden. Das weitere Ritzel 34 kann in gewichtssparender Weise so geformt sein, dass sein Innenumfang in einem Abstand von dem Außenumfang des Aufnahmekörpers 12 angeordnet ist. Die zweiten Haltebolzen 42 durchsetzen in dem weiteren Ritzel 34 ausgebildete Aufnahmebohrungen 44 sowie in dem nicht gezeigten noch weiteren Ritzel ausgebildete Aufnahmebohrungen und stellen somit eine sichere drehmomentübertragende Verbindung zwischen dem noch weiteren Ritzel und dem weiteren Ritzel 34 her.

Es versteht sich, dass die Mehrfach-Ritzelanordnung 10 eine beliebige Anzahl an weiteren Ritzeln 34 umfassen kann, die jeweils eine beliebige Anzahl von Zähnen aufweisen können. Jedes weitere Ritzel kann dann über mindestens einen entsprechenden Haltebolzen mit axial in Richtung der Ritzelbaugruppe 16 benachbarten weiteren Ritzeln und schließlich der Ritzelbaugruppe 16, d.h. dem ersten Ritzel 18 der Ritzelbaugruppe 16 verbunden sein. Jedes weitere Ritzel kann dann so geformt und über den mindestens einen Haltebolzen derart mit einem axial in Richtung der Ritzelbaugruppe 16 benachbarten weiteren Ritzel verbunden sein, dass sein Innenumfang in einem Abstand von dem Außenumfang des Aufnahmekörpers 12 angeordnet ist. Dies gilt für sämtliche weiteren Ritzel 34, bis auf das Ritzel mit der größten Anzahl an Zähnen bzw. dem größten Durchmesser. Dieses Ritzel ist direkt und drehmomentübertagend mit der Nabenhülse 14 verbunden, wie im Folgenden im Detail beschrieben wird.

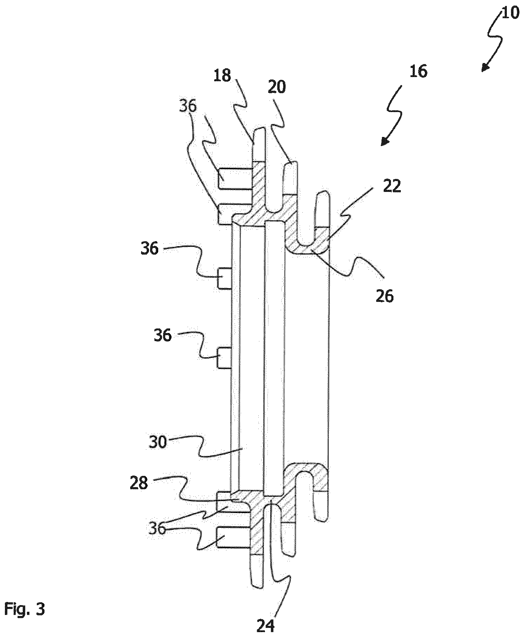

Figur 3 zeigt eine Schnittansicht der Ritzelbaugruppe 16 mit dem ersten Ritzel 18 und den beiden zweiten Ritzeln 20 und 22. Das erste Ritzel 18 ist über den Flanschabschnitt 24 mit dem zweiten Ritzel 20 verbunden. Das zweite Ritzel 20 ist mit dem Flanschabschnitt 26 mit dem Ritzel 22 verbunden. An dem ersten Ritzel 18 sind die Haltebolzen 36 angeordnet, die zur Verbindung mit dem weiteren Ritzel 34 (Fig. 1) dienen. An dem ersten Ritzel 18 ist ein Flanschabschnitt 28 ausgebildet. Der Flanschabschnitt 28 weist den Rastvorsprung 30 auf, der in Form eines umlaufenden Ringes ausgebildet ist und zur axialen Verbindung mit dem Aufnahmekörper 12 (Fig. 1) dient. Der Rastvorsprung 30 sichert die Ritzelbaugruppe 16 in axialer Richtung an dem Aufnahmekörper 12.

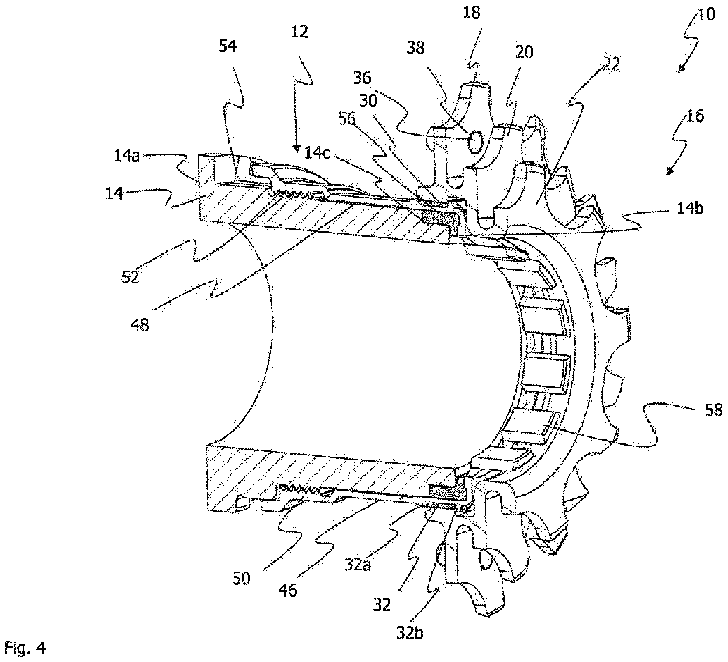

Figur 4 zeigt eine perspektivische Ansicht der Mehrfach-Ritzelanordnung 10 gemäß der ersten Ausführungsform ähnlich Fig. 1.

Die Mehrfach-Ritzelanordnung 10 umfasst den Aufnahmekörper 12, die Nabenhülse 14 und die Ritzelbaugruppe 16. Die Ritzelbaugruppe 16 wird über den Rastvorsprung 30 an dem Aufnahmekörper 12 gehalten. Der Rastvorsprung 30 greift in die Rastnut 32 an dem Aufnahmekörper 12 ein, um die Ritzelbaugruppe 16 in axialer Richtung der Mehrfach-Ritzelanordnung 10 an dem Aufnahmekörper 12 bzw. der Nabenhülse 14 zu sichern. Die Rastnut 32 wird von zwei Rastnasen 32a und 32b begrenzt, die den Rastvorsprung 30 zwischen sich aufnehmen. Im Anschluss an die Rastnase 32a umfasst der Aufnahmekörper 12 einen zylindrischen Abschnitt 46. Der zylindrische Abschnitt 46 führt beim Aufstecken des Aufnahmekörpers 12 auf die Nabenhülse 14 den Aufnahmekörper 12 zusammen mit einem zylindrischen Abschnitt 48 der Nabenhülse 14. Mit anderen Worten wirken eine Innenumfangsfläche des zylindrischen Abschnitts 46 des Aufnahmekörpers 12 und eine Außenumfangsfläche des zylindrischen Abschnitts 48 der Nabenhülse 14 zur Führung des Aufnahmekörpers 12 zusammen. An den zylindrischen Abschnitt 46 des Aufnahmekörpers 12 schließt sich ein Abschnitt mit einem Innengewinde 50 an. An der Nabenhülse 14 ist ein Abschnitt 52 mit einem Außengewinde vorgesehen. Der Aufnahmekörper 12 kann über die Gewindeabschnitte 50 und 52 mit dem Nabenkörper 14 verschraubt werden. Dabei wirken die zylindrischen Abschnitte 46 und 48 des Aufnahmekörpers 12 und des Nabenkörpers 14 als Führung, so dass der Aufnahmekörper 12 ohne Verkanten mit der Nabenhülse 14 verschraubt werden kann.

Die Nabenhülse 14 weist zwischen ihrer Stirnseite 14a und dem Außengewindeabschnitt 52 eine Außenverzahnung 54 auf, die zur Drehmomentübertragung zwischen einer die Ritzelbaugruppe 16 umfassenden Ritzelanordnung (in Fig. 4 nicht gezeigt) und dem Nabenkörper 14 dient. Dies wird im weiteren Verlauf dieser Beschreibung noch im Detail beschrieben.

Im Bereich der Stirnfläche 14b der Nabenhülse 14 und einer an der Nabenhülse 14 ausgebildeten Schulter 14c ist ein Körper 56 erkennbar, der aus einem Elastomer oder Kunststoff hergestellt ist. Der Körper 56 ist mit dem Aufnahmekörper 12 verbunden bzw. an dem Aufnahmekörper 12 befestigt. Der Körper 56 kann beispielsweise durch Umspritzen des Aufnahmekörpers 12 mit einem Elastomer oder Kunststoff hergestellt werden. Der Körper 56 bildet an dem in Fig. 4 rechten Ende des Aufnahmekörpers 12 einen Außenumfangsflächenabschnitt sowie einen Innenumfangsflächenabschnitt. Der Körper 56 bildet eine ringförmige Ummantelung für diesen Abschnitt des Aufnahmekörpers 12. Der Körper 56 erstreckt sich auch in der Rastnut 32. Der Körper 56 dient zur radialen und axialen Positionierung des Aufnahmekörpers 12 an der Nabenhülse 14. Ferner dient der Körper 56 auch zur radialen Abstützung der Ritzelbaugruppe 16 an dem Aufnahmekörper 12 bzw. in der Rastnut 32.

Der Aufnahmekörper 12 umfasst Führungsnasen 58, die sich radial innerhalb der zweiten Ritzel 20 und 22 erstrecken und zur Führung eines Achsen- bzw. Nabenabschnitts dienen können.

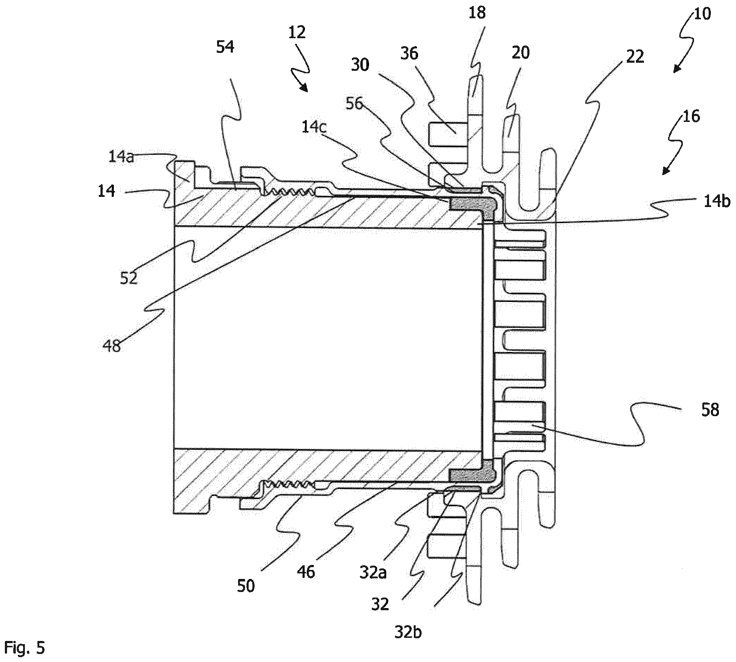

Figur 5 zeigt eine weitere Schnittansicht der Mehrfach-Ritzelanordnung 10.

Die Ritzelbaugruppe 16 wird von der Rastnut 32 mit ihren Rastnasen 32a und 32b an dem Aufnahmekörper 12 gehalten. Der Körper 56 dient zur axialen und radialen Positionierung des Aufnahmekörpers 12 an der Nabenhülse 14 und zur radialen Abstützung der Ritzelbaugruppe 16. Der Aufnahmekörper 12 wird über die Gewindeabschnitte 50, 52 mit der Nabenhülse verschraubt. Die Außenverzahnung 54 dient zur Drehmomentübertragung zwischen der Nabenhülse 14 und einer die Ritzelbaugruppe 16 umfassenden Ritzelanordnung.

Figur 6 zeigt eine perspektivische Ansicht der Mehrfach-Ritzelanordnung 10.

Die Mehrfach-Ritzelanordnung 10 umfasst die Ritzelbaugruppe 16, die Teil eine Ritzelanordnung RA ist. Die Ritzelanordnung RA umfasst neben der Ritzelbaugruppe 16 mit den Ritzeln 18, 20 und 22 mehrere weitere Ritzel 34₁ bis 34₈. Wie in Fig. 6 erkennbar ist, sind die Ritzel 34₁ bis 34₈ untereinander über Haltebolzen 42 verbunden. Zudem ist das Ritzel 34₁ über die Haltebolzen 36 mit der Ritzelbaugruppe 16 bzw. dem ersten Ritzel 18 verbunden. Die Bolzen 36 und 42 dienen zur Drehmomentübertragung zwischen den einzelnen Ritzeln 34₁ bis 34₈ und zur Drehmomentübertragung zwischen der Ritzelbaugruppe 16 und dem Ritzel 34₁.

Von der Ritzelanordnung RA wird das Drehmoment über das Ritzel 34₈ auf die Nabenhülse 14 übertragen. Dazu steht das größte Ritzel 34₈ mit der Nabenhülse 14 in Verbindung. Das Ritzel 34₈ weist eine Innenverzahnung (nicht gezeigt) auf, die komplementär zu der Außenverzahnung 56 an dem Nabenkörper 14 ausgebildet ist. In axialer Richtung wird das Ritzel 34₈ über den Aufnahmekörper 12 in seiner vorbestimmten Position an der Außenverzahnung 54 gehalten. Dazu liegt der Aufnahmekörper 12 mit seiner den Führungsnasen 58 entgegengesetzten Stirnseite an dem Ritzel 34₈ im Bereich des Innenumfangs des Ritzels 34₈ an.

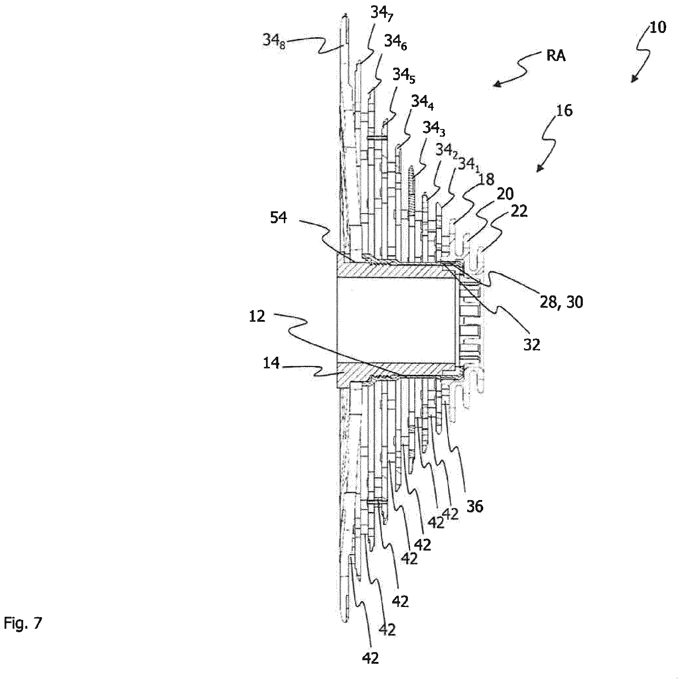

Figur 7 zeigt eine Schnittansicht der Mehrfach-Ritzelanordnung 10.

Die Ritzelbaugruppe 16 ist über die Bolzen 36 mit dem Ritzel 34₁ verbunden. Die Ritzel 34₁ bis 34₈ sind untereinander wiederum über die Bolzen 42 miteinander verbunden. Die Bolzen 36 und 42 erstrecken sich parallel zur Mittelachse der Mehrfach-Ritzelanordnung 10. Die Bolzen 36 und 42 dienen zur Drehmomentübertragung zwischen den einzelnen Ritzeln 34₁ bis 34₈. Das Drehmoment wird von dem Ritzel 34₈ über die Innenverzahnung des Ritzels 34₈, die mit der Außenverzahnung 54 an der Nabenhülse ein Eingriff steht, auf die Nabenhülse 14 übertragen.

Im Folgenden werden weitere Ausführungsformen der Erfindung mit Bezug auf die beigefügten Figuren beschrieben. Gleichartige oder gleichwirkende Merkmale werden mit denselben Bezugszeichen versehen, jedoch mit einer weiteren Ziffer vorangestellt.

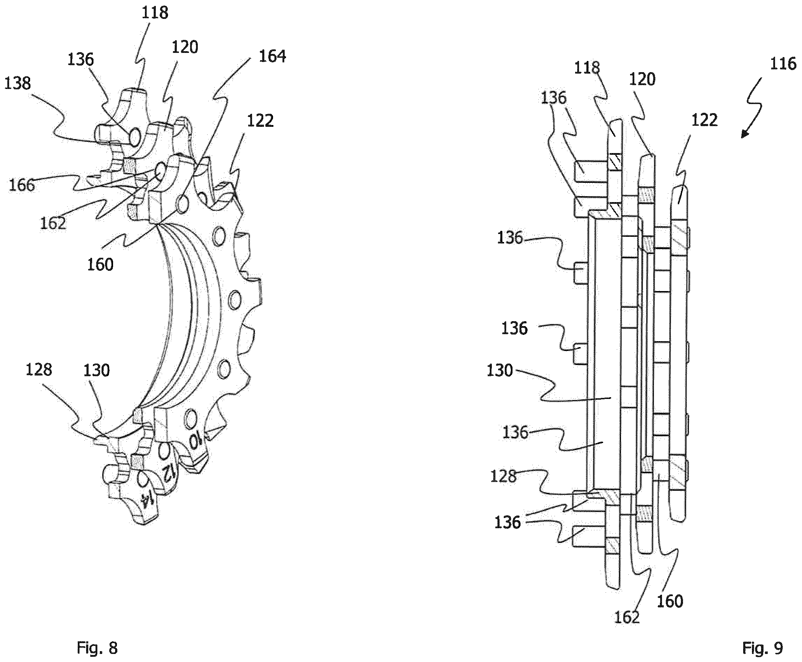

Figur 8 zeigt eine perspektivische Ansicht der Ritzelbaugruppe 116 mit den Ritzeln 118, 120 und 122 gemäß einer zweiten Ausführungsform.

Die Ritzel 118, 120 und 122 gemäß dieser Ausführungsform sind über Bolzen 160 und 162 miteinander verbunden. Dazu weisen die Ritzel 120 und 122 Aufnahmeöffnungen 164 und 166 auf, in denen die Bolzen 160, 162 aufgenommen sind. An dem ersten Ritzel 118 ist wiederum der Flanschabschnitt 128 ausgebildet, der mit dem Rastvorsprung 130 versehen ist. Die Bolzen 162 werden in entsprechenden Aufnahmeöffnungen in dem ersten Ritzel 118 aufgenommen, wobei die Aufnahmeöffnungen im ersten Ritzel 118 in Fig. 8 nicht gezeigt sind.

Figur 9 zeigt eine Schnittansicht der Ritzelbaugruppe 116.

Die Ritzel 118, 120 und 122 sind über die Verbindungsbolzen 116 und 162 miteinander verbunden. Zwischen den Ritzeln 120 und 122 erstrecken sich die Bolzen 160. Zwischen den Ritzeln 120 und 118 erstrecken sich die Bolzen 162. An dem ersten Ritzel 118 sind die Bolzen 136 zur Verbindung mit weiteren Ritzeln vorgesehen. Das Ritzel 118 weist den Flanschabschnitt 128 mit seinem Rastvorsprung 130 auf.

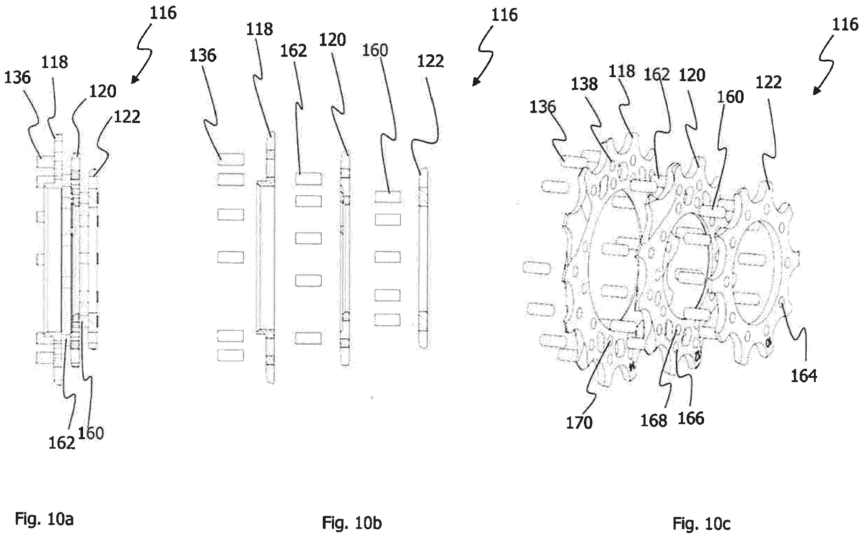

Figur 10 zeigt verschiedene Ansichten der Ritzelbaugruppe 116 gemäß der zweiten Ausführungsform.

Figur 10A entspricht Figur 9, sodass hier zur Vermeidung von Wiederholungen auf detaillierte Ausführungen zu Figur 10A verzichtet wird.

Figur 10B zeigt die Komponenten der Ritzelbaugruppe 116 im getrennten Zustand

Die Ritzel 118, 120 und 122 gemäß der zweiten Ausführungsform sind als separate Ritzel ausgebildet, die über die Bolzen 160 und 162 miteinander verbunden werden. In dem Ritzel 118 können ferner die Bolzen 136 angebracht werden, die zur Verbindung mit weiteren Ritzeln dienen.

Figur 10C zeigt eine perspektivische Ansicht der Ritzelanordnung 116 im getrennten Zustand.

Das Ritzel 122 weist Aufnahmeöffnungen 164 für die Bolzen 160 auf. Die Bolzen 160 können wiederum in Aufnahmeöffnungen 168 in dem Ritzel 120 aufgenommen werden. Die Aufnahmeöffnungen 166 in dem Ritzel 120 dienen zur Aufnahme der Bolzen 162. Die Bolzen 162 verbinden das Ritzel 120 mit dem Ritzel 118. Die Bolzen 162 werden in Aufnahmeöffnungen 170 in dem Ritzel 118 aufgenommen. Das Ritzel 118 weist ferner Aufnahmeöffnungen 138 auf, die zur Aufnahme der Bolzen 136 dienen. Die Bolzen 136 können die Ritzelanordnung 116 mit weiteren Ritzeln verbinden.

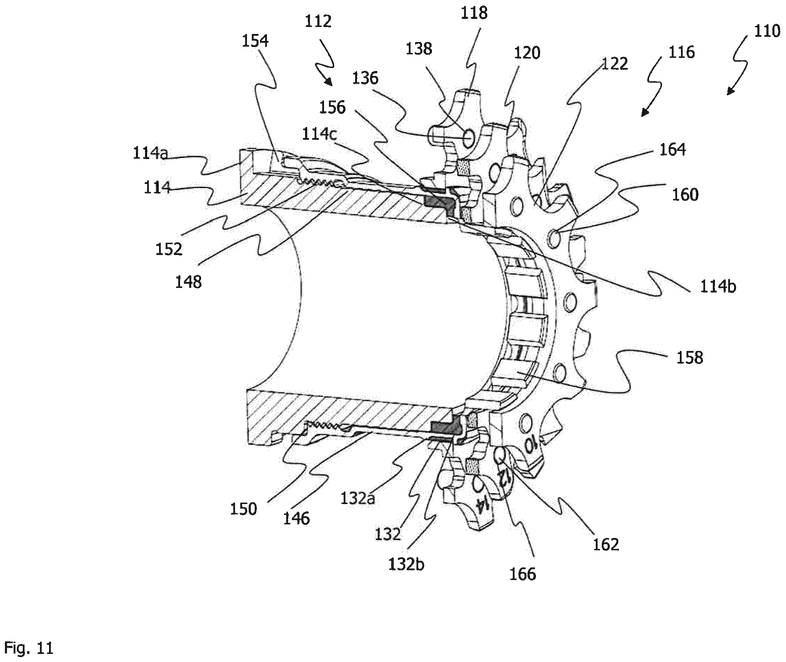

Figur 11 zeigt eine perspektivische Ansicht der Mehrfach-Ritzelanordnung 110 mit der Ritzelbaugruppe 116.

Der wesentliche Unterschied zwischen der ersten Ausführungsform gemäß der Figuren 1 bis 7 und der zweiten Ausführungsform gemäß der Figuren bis 12 ist, dass die Ritzel 118, 120, 122 der Ritzelbaugruppe 116 über die Bolzen 160 und 162 miteinander verbunden sind.

Der Aufnahmekörper 112 und die Nabenhülse 114 sind identisch mit dem Aufnahmekörper 12 und der Nabenhülse 14 gemäß der ersten Ausführungsform.

Zur Vermeidung von Wiederholungen wird auf eine erneute detaillierte Beschreibung des Aufnahmekörpers 112 und der Nabenhülse 114 verzichtet und an dieser Stelle auf die Ausführungen im Hinblick auf die erste Ausführungsform verwiesen.

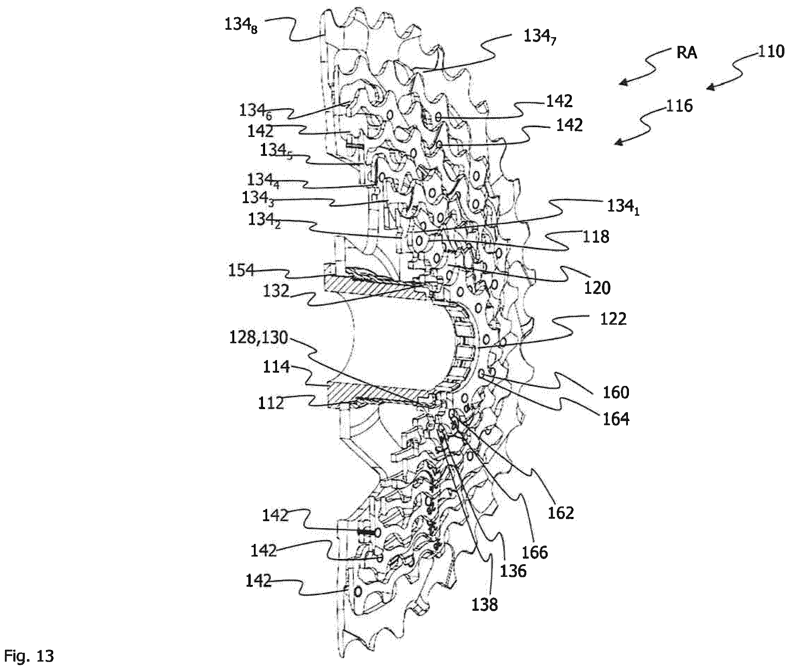

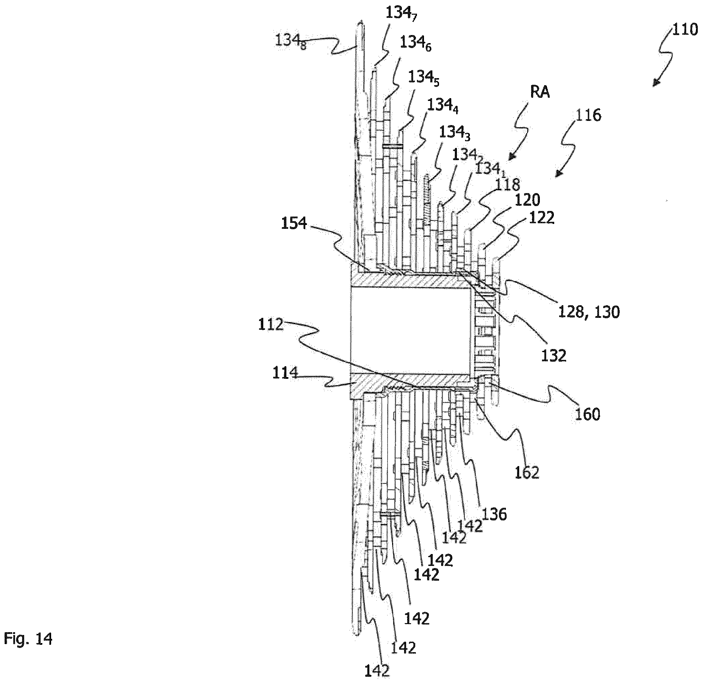

In den Figuren 13 und 14 wird nun ersichtlich, dass sämtliche Ritzel 118, 120, 122, 134₁ bis 134₈ über Bolzen 136, 142, 160 und 162 miteinander verbunden sind.

Die Drehmomentübertragung zwischen der Ritzelanordnung RA und der Nabenhülse 114 erfolgt in identischer Weise, wie bei der ersten Ausführungsform.

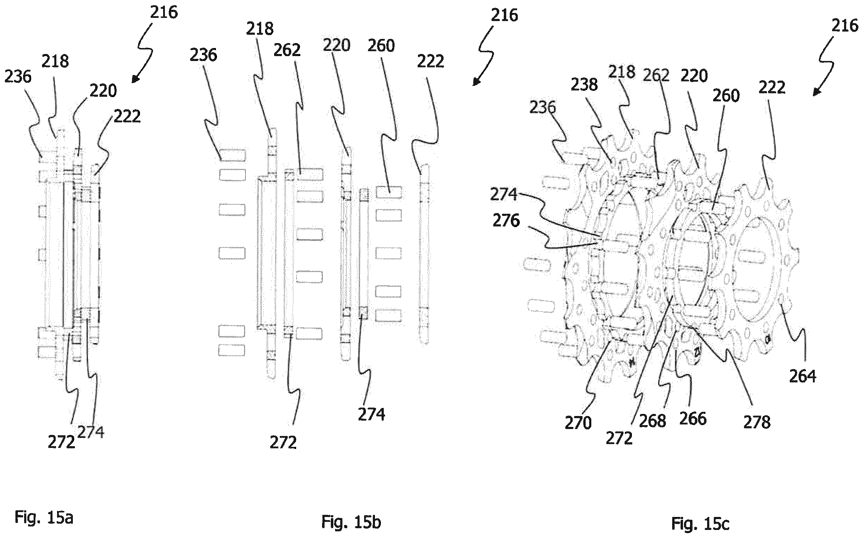

Figur 15 zeigt verschiedene Ansichten einer Ritzelbaugruppe 216 gemäß einer dritten Ausführungsform der Erfindung.

In Figur 15a ist die Ritzelbaugruppe 216 mit ihren Ritzeln 218, 220 und 222 gezeigt. Die Ritzel 118, 120 und 122 sind über Bolzen (Figur 15b) miteinander verbunden. Zwischen den Ritzeln 118 und 120 ist ein Abstandshalter 272 angeordnet. Zwischen den Ritzeln 220 und 222 ist ein weiterer Abstandshalter 274 vorgesehen.

Figur 15b zeigt die Komponenten der Ritzelbaugruppe 216 im getrennten Zustand.

Die Ritzel 218 und 220 werden über die Bolzen 262 verbunden. Zwischen den Ritzeln 218 und 220 ist der Abstandshalter 272 vorgesehen, der ringförmig ausgebildet ist. Der Abstandshalter 272 wird über die Bolzen 262 zwischen den Ritzeln 218 und 220 gehalten. Zwischen den Ritzeln 220 und 222 ist ebenfalls ein Abstandshalter 274 vorgesehen, der ringförmig ausgebildet ist und über die Bolzen 260 zwischen den Ritzeln 220 und 222 gehalten wird.

Figur 15c zeigt eine perspektivische Ansicht der Komponenten der Ritzelbaugruppe 216 im getrennten Zustand.

Die Abstandshalter 272 und 274 weisen halbkreisförmige Ausnehmungen 276 und 278 auf, die die Bolzen 262 und 260 abschnittsweise aufnehmen können. Die Ausnehmungen 276 und 278 sind an den Außenumfangsflächen der ringförmigen Abstandshalter 272 und 274 vorgesehen. Im verbundenen Zustand werden die Abstandshalter 272 und 274 über die Bolzen 260 und 262 zwischen den entsprechenden Ritzeln 218, 220 und 222 gehalten und stellen so einen vorbestimmten axialen Abstand zwischen den Ritzeln 218, 220 und 222 ein.

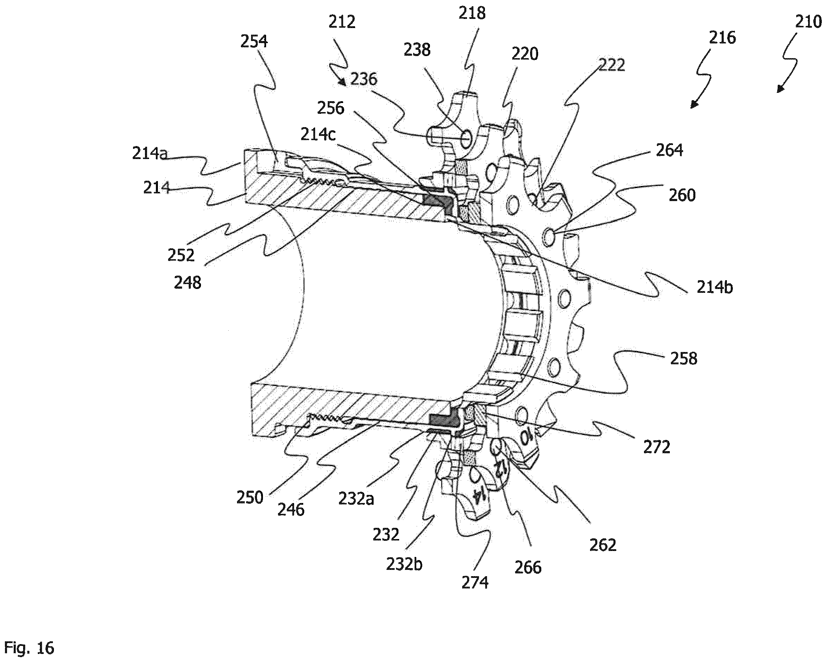

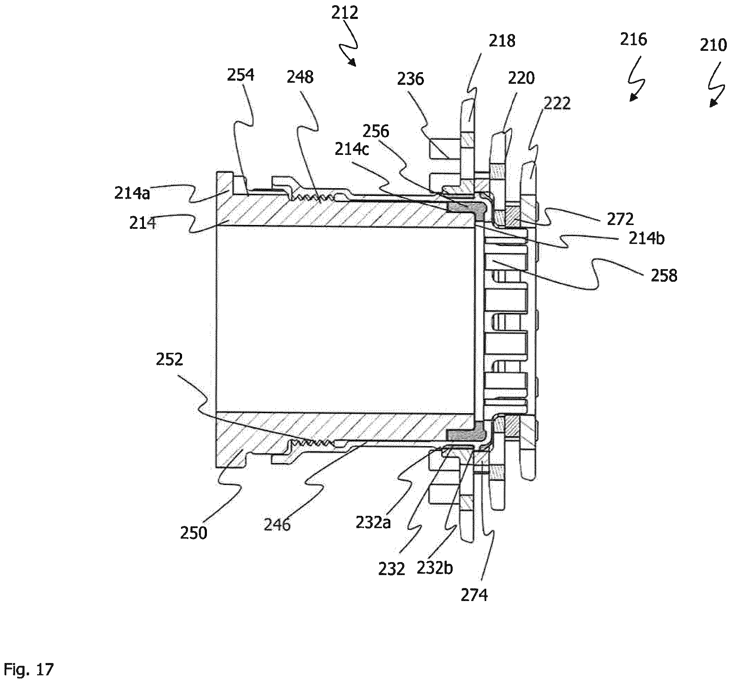

Die Figuren 16 und 17 zeigen perspektivische Ansichten der Mehrfach-Ritzelanordnung 210 mit der Ritzelanordnung 216.

Der einzige Unterschied zu der voranstehend beschriebenen zweiten Ausführungsform besteht in den Abstandshalterringen 272 und 274, die zwischen den Ritzeln 218, 220 und 222 der Ritzelbaugruppe 216 vorgesehen sind und so einen axialen Abstand zwischen den Ritzeln 218, 220 und 222 abstellen. Der Abstandshalter 272 stellt einen vorbestimmten axialen Abstand zwischen dem Ritzel 218 und dem Ritzel 220 ein. Der Abstandshalter 274 bestimmt den axialen Abstand zwischen dem Ritzel 220 und dem Ritzel 222.

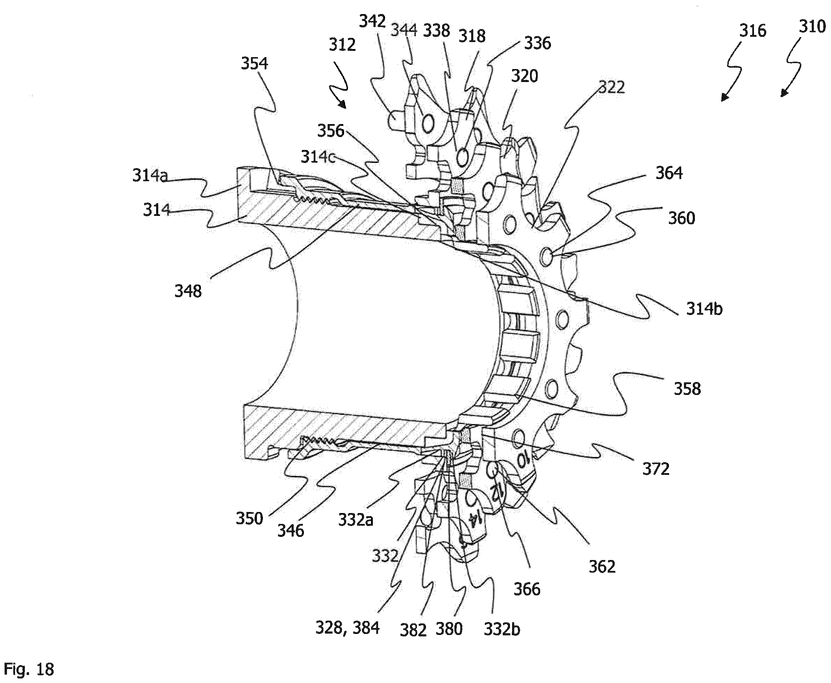

Figur 18 zeigt eine perspektivische Ansicht einer Mehrfach-Ritzelanordnung 310 gemäß einer vierten Ausführungsform der Erfindung.

Die Ritzelbaugruppe 316 entspricht der Ritzelbaugruppe 116 gemäß der zweiten Ausführungsform.

Die Ritzelbaugruppe 316 wird gemäß dieser Ausführungsform über einen Haltering 380 in axialer Richtung an dem Aufnahmekörper 312 gehalten. Der Haltering 380 ist in einer Haltenut 332 mit Haltenasen 332a und 332b aufgenommen und liegt mit seiner axialen Fläche 380a an dem Flanschabschnitt 328 des ersten Ritzels 318 an. Anders ausgedrückt steht der Haltering 380 über seine axiale Fläche 382 in Kontakt mit einer axialen Fläche 384 des Flanschabschnitts 28 bzw. des Ritzels 318.

Die Haltenase 332a dient zur radialen Abstützung des Ritzels 318 bzw. der Ritzelanordnung 16. Das Ritzel 18 liegt mit seinem Vorsprung 318 an der Haltenase 332a an. An dem Aufnahmekörper 312 ist wiederum der Elastomerkörper 356 vorgesehen, der zur axialen und radialen Positionierung des Aufnahmekörpers dient.

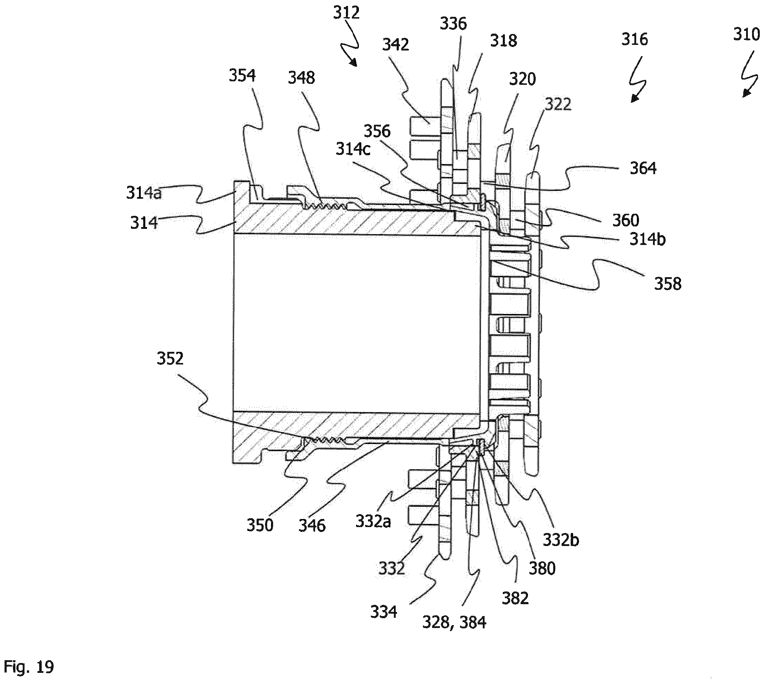

Figur 19 zeigt eine Schnittansicht der Mehrfach-Ritzelanordnung 310.

Der Haltering 380 ist in der Haltenut 332 aufgenommen und wird in axialer Richtung über die Haltenasen 332a und 332b an dem Aufnahmekörper 312 gehalten. Der Haltering 380 liegt mit seiner axialen Fläche 382 an der axialen Fläche 384 des Ritzels 318 an. Die Haltenase 332a dient zur radialen Abstützung des Ritzels 318 bzw. der Ritzelbaugruppe 316.

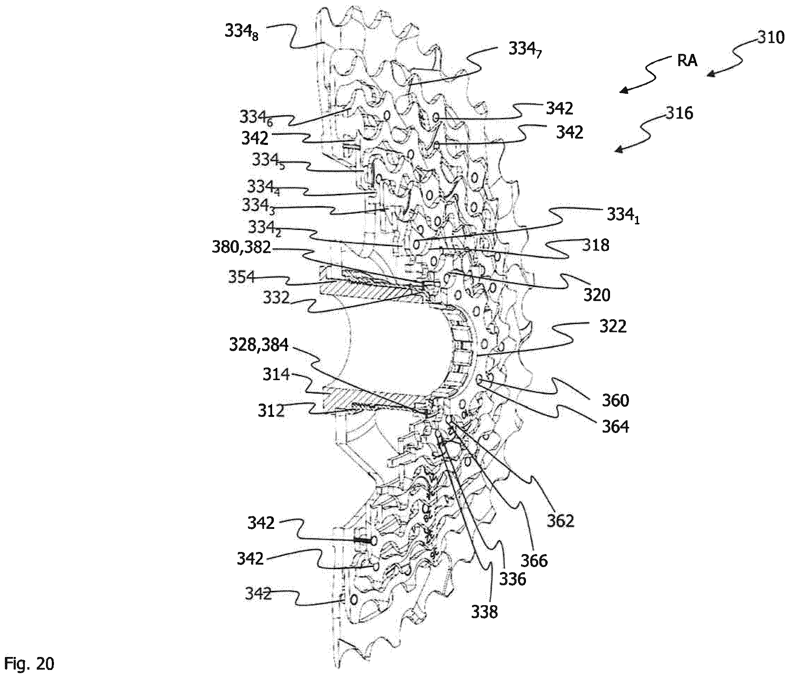

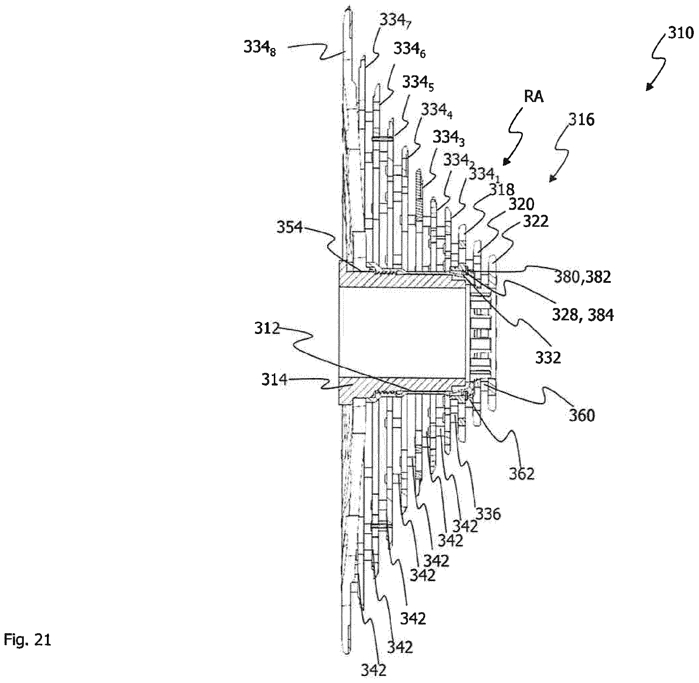

Die Figuren 20 und 21 zeigen Ansichten der Mehrfach-Ritzelanordnung 310 mit den Ritzelanordnungen 358. Die Ritzelbaugruppe 316 ist ein Bestandteil der Ritzelanordnung RA. Die Drehmomentübertragung zwischen der Ritzelanordnung RA und der Nabenhülse 314 erfolgt wie bei den voranstehend beschriebenen Ausführungsformen über das Ritzel 334₈. In den Figuren 20 und 21 ist der Haltering 380 gezeigt, der die Ritzelanordnung 358 in axialer Richtung an dem Aufnahmekörper 312 sichert.

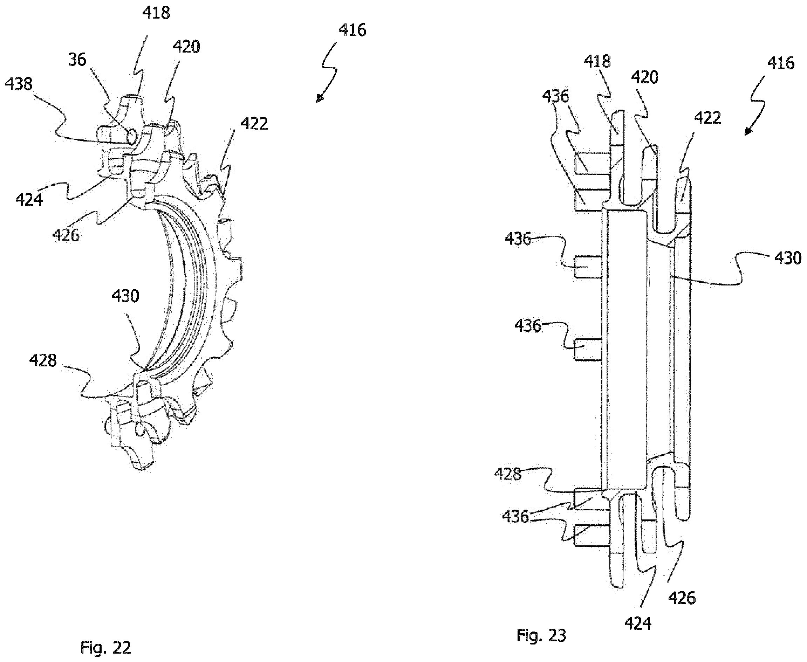

Die Figuren 22 und 23 zeigen eine Ritzelbaugruppe 416 gemäß einer fünften Ausführungsform der Erfindung.

Die Ritzelbaugruppe 416 entspricht weitestgehend der Ritzelbaugruppe 416, die in Zusammenhang mit den Figuren 1 bis 7 beschrieben wurde. Die Ritzel 418 und 420 sind über den Flanschabschnitt 424 miteinander verbunden. Die Ritzel 420 und 422 sind über einen weiteren Flanschabschnitt 426 miteinander verbunden. An dem Ritzel 418 ist ein Flanschabschnitt 428 vorgesehen, wobei gemäß dieser Ausführungsform an dem Flanschabschnitt 428 kein Vorsprung vorgesehen ist. Vielmehr ist diese Ausführungsform an dem Flanschabschnitt 426 ein Rastvorsprung 486 ausgebildet. Der Rastvorsprung 486 erstreckt sich in Form eines Zackens radial nach innen.

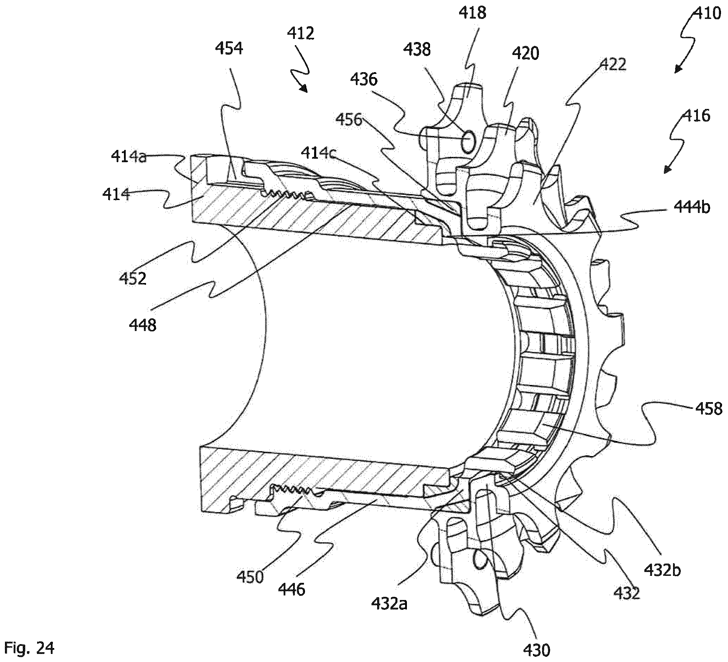

Figur 24 zeigt eine perspektivische Ansicht der Mehrfach-Ritzelanordnung 410 mit der Ritzelbaugruppe 416. Der Aufnahmekörper 412 ist im Bereich seiner Führungsvorsprünge einer Rastnut 432 versehen. Die Rastnut 432 wird von einer Rastnase 432a und einem Anlageabschnitt 432b begrenzt. In der Rastnut 432 wird der Rastvorsprung 430 an dem Flanschabschnitt 426 aufgenommen und dient zur axialen Sicherung der Ritzelbaugruppe 416 an dem Aufnahmekörper 412. Das erste Ritzel 418 ist über den Elastomerkörper 456 mit dem Aufnahmekörper 412 verbunden.

Die Rastnut 432 ist vor der axialen Stirnseite 414b der Nabenhülse 414 angeordnet, das heißt freitragend vor der Nabenhülse 414b.

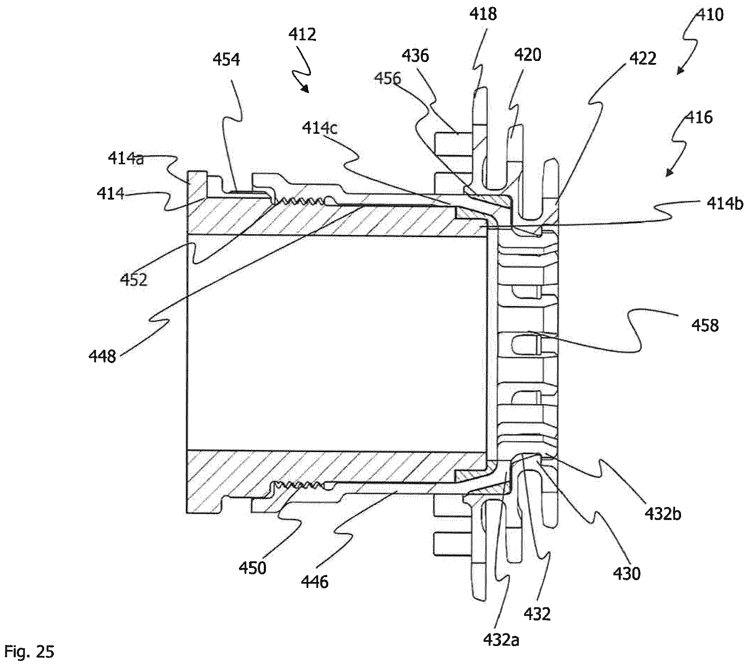

Figur 25 zeigt eine Schnittansicht der Mehrfach-Ritzelanordnung 410 gemäß der fünften Ausführungsform der Erfindung.

Die Ritzelanordnung 416 ist über den Elastomerkörper 456 an dem Aufnahmekörper 412 mit dem Aufnahmekörper 412 verbunden. Das erste Ritzel 418 ist über den Elastomerkörper 456 mit dem Aufnahmekörper 412 verbunden. Über den Rastvorsprung 430 an dem Flanschabschnitt 426, der mit der Rastnut 432 zusammenwirkt, wird die Ritzelbaugruppe 416 an dem Aufnahmekörper 412 gesichert.

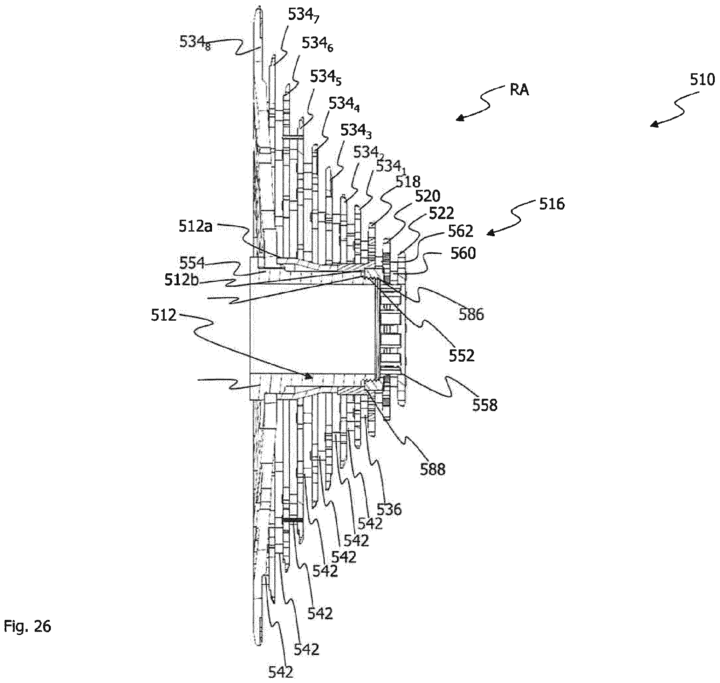

Figur 26 zeigt eine Schnittansicht einer Mehrfach-Ritzelanordnung 510 gemäß einer sechsten Ausführungsform.

Die Ritzelbaugruppe 516 gemäß dieser Ausführungsform wird wiederum von den Ritzeln 518, 520 und 522 gebildet, die über die Bolzen 560 und 562 miteinander verbunden sind.

Der Aufnahmekörper 512 gemäß dieser Ausführungsform ist mehrteilig ausgebildet und dient zur radialen Abstützung der Ritzelanordnung 558. Der Aufnahmekörper 512 wird von einem ersten Abschnitt 512a und einem zweiten Abschnitt 512b gebildet. Der zweite Abschnitt 512b ist einstückig mit dem Ritzel 518 der Ritzelbaugruppe 516 ausgebildet. Die Ritzelbaugruppe 516 ist somit über das erste Ritzel 518 mit dem Aufnahmekörper 512 verbunden. An der Nabenhülse 514 ist ein Abschnitt 552 mit einem Außengewinde vorgesehen. Ein Sicherungselement 586 umfasst ein Innengewinde und kann mit dem Außengewindeabschnitt 552 verschraubt werden. Der Aufnahmekörper 512 bzw. der Abschnitt 512a des Aufnahmekörpers weist eine Anlageschulter 588 für das Sicherungselement 586 auf. Über das Sicherungselement 586 kann der Aufnahmekörper 152 axial mit dem Ritzel 534₈ verspannt werden und derart an der Nabenhülse 514 gesichert werden. Die Ritzelanordnung RA wird mit der Ritzelbaugruppe 516 kann über das Sicherungselement 86 an der Nabenhülse 514 befestigt werden.

Die einzelnen Ritzel 518, 520, 522, 534₁ bis 534₈ sind über Bolzen 536, 542, 560 und 562 miteinander verbunden.

Der Abschnitt 512a des Aufnahmekörpers 512 erstreckt sich abschnittsweise konisch in Richtung des Ritzels 534₈. Das Ritzel 534₈ dient zur Drehmomentübertragung zwischen der Ritzelanordnung RA und dem Nabenkörper 514. Dazu weist das Ritzel 534₈ eine zur der Außenverzahnung 554 an dem Nabenkörper 514 korrespondierende Verzahnung auf.

Die Ausführungsform nach Fig. 26 zeichnet sich dadurch aus, dass an der Nabenhülse 14 in axialer Richtung aufeinanderfolgend die Außenverzahnung 554, eine radiale Abstützstelle sowie ein Abschnitt 552 mit einem Außengewinde angeordnet sind.

## Patentansprüche

1. Mehrfach-Ritzelanordnung (10) zur Montage an einer Hinterradachse eines Fahrrads, umfassend:
- einen Aufnahmekörper (12), der zur Montage auf der Hinterradachse ausgebildet ist, und
- eine Ritzelbaugruppe (16) mit einem ersten Ritzel (18), dessen Innendurchmesser größer ist als ein Außendurchmesser des Aufnahmekörpers (12) und das mit dem Aufnahmekörper (12) verbunden ist, und mindestens einem zweiten Ritzel (20, 22), dessen Innendurchmesser kleiner ist als ein Außendurchmesser des Aufnahmekörpers (12) und das freitragend ausgeführt und über das erste Ritzel (18) mit dem Aufnahmekörper (12) verbunden ist, wobei die Ritzelbaugruppe (16) über ein an dem Aufnahmekörper (312) angeordnetes Sicherungselement (380) mit dem Aufnahmekörper (312) verbunden ist, **dadurch gekennzeichnet, dass** das Sicherungselement von einem Haltering (380) gebildet ist.

2. Mehrfach-Ritzelanordnung nach Anspruch 1,
bei der sich der Haltering (380) um den Außenumfang des Aufnahmekörpers (312) herum erstreckt.

3. Mehrfach-Ritzelanordnung nach Anspruch 1 oder 2,
bei der der Haltering (380) in einer Haltenut (332) in dem Aufnahmekörper (312) aufgenommen ist.

4. Mehrfach-Ritzelanordnung nach Anspruch 3,
bei der die Haltenut (332) von zwei Haltenasen (322a, 322b) begrenzt ist, die am Außenumfang des Aufnahmekörpers (312) vorgesehen sind.

5. Mehrfach-Ritzelanordnung nach einem der vorangehenden Ansprüche,
bei der das erste Ritzel (16) und das mindestens eine zweite Ritzel (20, 22) einstückig ausgeführt und über einen sich parallel zu der Hinterradachse erstreckenden ersten Flanschabschnitt (24) miteinander verbunden sind.

6. Mehrfach-Ritzelanordnung nach einem der vorangehenden Ansprüche,
bei der das erste Ritzel (116) und das mindestens eine zweite Ritzel (120, 122) über separate Verbindungsmittel (162) miteinander verbunden sind.

7. Mehrfach-Ritzelanordnung nach einem der vorangehenden Ansprüche,
bei der die Ritzelbaugruppe (16) zwei zweite Ritzel (20, 22) umfasst.

8. Mehrfach-Ritzelanordnung nach Anspruch 7,
bei der die zwei zweiten Ritzel (20, 22) über einen sich parallel zu der Hinterradachse erstreckenden zweiten Flanschabschnitt (26) oder separate Verbindungsmittel (160) miteinander verbunden sind.

9. Mehrfach-Ritzelanordnung nach einem der vorangehenden Ansprüche,
bei der zwischen benachbarten Ritzeln (218, 220, 222) der Ritzelbaugruppe (216) Abstandshalter (272, 274) vorgesehen sind.

10. Mehrfach-Ritzelanordnung nach einem der Ansprüche 7 bis 9,
bei der die zwei zweiten Ritzel (20, 22) gleiche Innendurchmesser aufweisen.

11. Mehrfach-Ritzelanordnung nach einem der vorangehenden Ansprüche,
bei der der Aufnahmekörper (512) fest mit dem ersten Ritzel (518) verbunden ist.

12. Mehrfach-Ritzelanordnung nach einem der vorangehenden Ansprüche,
bei der zumindest ein weiteres Ritzel (34₁-34₈) durch mindestens einen sich parallel zu der Hinterradachse erstreckenden ersten Haltebolzen (36, 42) mit der Ritzelbaugruppe (16) drehmomentübertragend verbunden ist.

13. Mehrfach-Ritzelanordnung nach einem der vorangehenden Ansprüche,
bei der die separaten Verbindungsmittel (160, 162) sich parallel zu der Hinterradachse erstreckenden Haltebolzen sind.

14. Mehrfach-Ritzelanordnung nach Anspruch 12 oder 13,
bei der die Haltebolzen (36; 160, 162) in einem Bereich radial innerhalb einer Zahnspitze des nächstkleineren Ritzels (34₁-34₈; 118, 12, 122, 134₁-134₈) angeordnet sind.

15. Mehrfach-Ritzelanordnung nach einem der vorangehenden Ansprüche,
bei der die sich parallel zu der Hinterradachse erstreckenden Haltebolzen (36,42; 136, 142, 160, 162) in den entsprechenden Ritzeln (18, 20, 22, 34₁-34₈; 118, 120, 122, 134₁-134₈) ausgebildete Aufnahmebohrungen (38, 44; 138, 144, 164, 166) durchsetzen.

16. Hinterrad-Achsanordnung für ein Fahrrad mit
- einer Hinterradachse, die zur Befestigung an einem Fahrradrahmen ausgebildet ist,
- einer auf der Hinterradachse drehbar gelagerten Nabenhülse (14),
- einer mit einer Antriebskette zusammenwirkenden Mehrfach-Ritzelanordnung (10) nach einem der vorangehenden Ansprüche, und
- einer Drehmomentübertragungsanordnung zum richtungsselektiven Übertragen eines Drehmoments von der Mehrfach-Ritzelanordnung (10) auf die Nabenhülse (14).

## Claims

1. A multiple pinion arrangement (10) for mounting on a rear wheel axle of a bicycle, comprising:
- a receiving body (12) that is designed for mounting on the rear wheel axle, and
- a pinion assembly (16) with a first pinion (18) whose inner diameter is larger than an outer diameter of the receiving body (12) and which is connected to the receiving body (12), and at least one second pinion (20, 22) whose inner diameter is smaller than an outer diameter of the receiving body (12) and which has a self-supporting design and is connected to the receiving body (12) via the first pinion (18), wherein the pinion assembly (16) is connected to the receiving body (312) via a securing element (380) situated on the receiving body (312), **characterized in that** the securing element is formed by a retaining ring (380).

2. The multiple pinion arrangement according to Claim 1,
wherein the retaining ring (380) extends around the outer circumference of the receiving body (312).

3. The multiple pinion arrangement according to Claim 1 or 2,
wherein the retaining ring (380) is accommodated in a retaining groove (332) in the receiving body (312).

4. The multiple pinion arrangement according to Claim 3,
wherein the retaining groove (332) is delimited by two retaining lugs (322a, 322b) that are provided on the outer circumference of the receiving body (312).

5. The multiple pinion arrangement according to one of the preceding claims,
wherein the first pinion (16) and the at least one second pinion (20, 22) are designed in one piece and are joined together via a first flange section (24) that extends in parallel to the rear wheel axle.

6. The multiple pinion arrangement according to one of the preceding claims,
wherein the first pinion (116) and the at least one second pinion (120, 122) are joined together via separate connecting means (162).

7. The multiple pinion arrangement according to one of the preceding claims,
wherein the pinion assembly (16) includes two second pinions (20, 22).

8. The multiple pinion arrangement according to Claim 7,
wherein the two second pinions (20, 22) are joined together via a second flange section (26) or separate connecting means (160) that extend(s) in parallel to the rear wheel axle.

9. The multiple pinion arrangement according to one of the preceding claims,
wherein spacers (272, 274) are provided between adjacent pinions (218, 220, 222) of the pinion assembly (216).

10. The multiple pinion arrangement according to one of Claims 7 to 9, wherein the two second pinions (20, 22) have the same inner diameter.

11. The multiple pinion arrangement according to one of the preceding claims,
wherein the receiving body (512) is fixedly connected to the first pinion (518).

12. The multiple pinion arrangement according to one of the preceding claims,
wherein at least one further pinion (34₁-34₈) is connected to the pinion assembly (16) in a torque-transmitting manner by at least one first retaining bolt (36, 42) that extends in parallel to the rear wheel axle.

13. The multiple pinion arrangement according to one of the preceding claims,
wherein the separate connecting means (160, 162) are retaining bolts that extend in parallel to the rear wheel axle.

14. The multiple pinion arrangement according to Claim 12 or 13,
wherein the retaining bolts (36; 160, 162) are situated in an area radially within a tooth tip of the next smaller pinion (34₁-34₈; 118, 12, 122, 134₁-134₈).

15. The multiple pinion arrangement according to one of the preceding claims,
wherein the retaining bolts (36, 42; 136, 142, 160, 162) extending in parallel to the rear wheel axle pass through receiving holes (38, 44; 138, 144, 164, 166) formed in the corresponding pinions (18, 20, 22, 34₁-348; 118, 120, 122, 134₁-134₈).

16. A rear wheel axle arrangement for a bicycle, comprising
- a rear wheel axle that is designed for fastening to a bicycle frame,
- a hub sleeve (14) that is rotatably supported on the rear wheel axle,
- a multiple pinion arrangement (10) according to one of the preceding claims that cooperates with a drive chain, and
- a torque transmission system for direction-selectively transmitting a torque from the multiple pinion arrangement (10) to the hub sleeve (14).

## Revendications

1. Agencement de pignon multiple (10) destiné à être monté sur un axe de roue arrière d'une bicyclette comprenant :
- un corps récepteur (12) qui est conçu pour être monté sur l'axe de roue arrière, et
- un ensemble de pignons (16) comprenant un premier pignon (18) dont le diamètre intérieur est plus grand qu'un diamètre extérieur du corps récepteur (12) et qui est relié au corps récepteur (12), et au moins un deuxième pignon (20, 22) dont le diamètre intérieur est plus petit qu'un diamètre extérieur du corps récepteur (12) et qui est réalisé à portée libre et relié au corps récepteur (12) par le premier pignon (18), l'ensemble de pignons (16) étant relié au corps récepteur (312) par un élément de fixation (380) disposé sur le corps récepteur (312), **caractérisé en ce que** l'élément de fixation est formé par une bague de retenue (380).

2. Agencement de pignon multiple selon la revendication 1,
dans lequel la bague de retenue (380) s'étend autour de la circonférence extérieure du corps récepteur (312).

3. Agencement de pignon multiple selon la revendication 1 ou 2,
dans lequel la bague de retenue (380) est reçue dans une rainure de retenue (332) dans le corps récepteur (312).

4. Agencement de pignon multiple selon la revendication 3,
dans lequel la rainure de retenue (332) est limitée par deux ergots de retenue (322a, 322b) prévus sur la circonférence extérieure du corps récepteur (312).

5. Agencement de pignon multiple selon l'une des revendications précédentes,
dans lequel le premier pignon (16) et ledit au moins un deuxième pignon (20, 22) sont réalisés d'une seule pièce et reliés entre eux par une première partie de bride (24) s'étendant parallèlement à l'axe de roue arrière.

6. Agencement de pignon multiple selon l'une des revendications précédentes,
dans lequel le premier pignon (116) et ledit au moins un deuxième pignon (120, 122) sont reliés entre eux par des moyens de liaison distincts (162).

7. Agencement de pignon multiple selon l'une des revendications précédentes,
dans lequel l'ensemble de pignons (16) comprend deux deuxièmes pignons (20, 22).

8. Agencement de pignon multiple selon la revendication 7,
dans lequel les deux deuxièmes pignons (20, 22) sont reliés entre eux par une deuxième partie de bride (26) s'étendant parallèlement à l'axe de roue arrière ou par des moyens de liaison séparés (160).

9. Agencement de pignon multiple selon l'une des revendications précédentes,
dans lequel des entretoises (272, 274) sont prévues entre des pignons adjacents (218, 220, 222) de l'ensemble de pignons (216).

10. Agencement de pignon multiple selon l'une des revendications 7 à 9,
dans lequel les deux deuxièmes pignons (20, 22) présentent le même diamètre intérieur.

11. Agencement de pignon multiple selon l'une des revendications précédentes,
dans lequel le corps récepteur (512) est solidaire du premier pignon (518).

12. Agencement de pignon multiple selon l'une des revendications précédentes,
dans lequel au moins un autre pignon (34₁-34₈) est relié en transmission de couple à l'ensemble de pignons (16) par au moins une première goupille de retenue (36, 42) s'étendant parallèlement à l'axe de roue arrière.

13. Agencement de pignon multiple selon l'une des revendications précédentes,
dans lequel les moyens de liaison séparés (160, 162) sont des goupilles de retenue s'étendant parallèlement à l'axe de roue arrière.

14. Agencement de pignon multiple selon la revendication 12 ou 13,
dans lequel les goupilles de retenue (36 ; 160, 162) sont disposées dans une zone située radialement à l'intérieur d'une pointe de dent du pignon immédiatement inférieur (34₁-34₈ ; 118, 12, 122, 134₁-134₈).

15. Agencement de pignon multiple selon l'une des revendications précédentes,
dans lequel les goupilles de retenue (36, 42 ; 136, 142, 160, 162) s'étendant parallèlement à l'axe de roue arrière traversent des perçages de réception (38, 44 ; 138, 144, 164, 166) formés dans les pignons correspondants (18, 20, 22, 34₁-34₈ ; 118, 120, 122, 134₁-134₈).

16. Agencement d'axe de roue arrière pour une bicyclette, comprenant
- un axe de roue arrière qui est conçu pour être fixé à un cadre de bicyclette,
- un corps de moyeu (14) monté à rotation sur l'axe de roue arrière,
- un agencement de pignon multiple (10) selon l'une des revendications précédentes coopérant avec une chaîne d'entraînement et
- un agencement de transmission de couple pour la transmission sélective en direction d'un couple de l'agencement de pignon multiple (10) au corps de moyeu (14).
